(19) Europäisches Patentamt
European Patent Office
Office européen des brevets

(11) EP 4 329 190 A1

(12) **EUROPEAN PATENT APPLICATION**
published in accordance with Art. 153(4) EPC

(43) Date of publication:
28.02.2024 Bulletin 2024/09

(21) Application number: 21937975.7

(22) Date of filing: 14.12.2021

(51) International Patent Classification (IPC):
*H02P 29/024* (2016.01)

(52) Cooperative Patent Classification (CPC):
B62D 5/0481; H02P 21/20; H02P 29/024;
B62D 5/0487

(86) International application number:
PCT/JP2021/045949

(87) International publication number:
WO 2022/224485 (27.10.2022 Gazette 2022/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.04.2021 PCT/JP2021/015981

(71) Applicant: MITSUBISHI ELECTRIC
CORPORATION
Chiyoda-ku
Tokyo 100-8310 (JP)

(72) Inventors:
• KIMURA, Takuya
Tokyo 100-8310 (JP)
• OGIWARA, Kento
Tokyo 100-8310 (JP)
• OGAWA, Kenji
Tokyo 100-8310 (JP)
• KUNIMITSU, Takahiro
Tokyo 100-8310 (JP)

(74) Representative: Hoffmann Eitle
Patent- und Rechtsanwälte PartmbB
Arabellastraße 30
81925 München (DE)

(54) **MOTOR CONTROL DEVICE AND ELECTRIC POWER STEERING DEVICE**

(57) An electric motor control device comprises: an abnormal torque estimation unit (16) for estimating abnormality of torque of an electric motor (10) from target electric-current values determined by an electric-current instruction calculation unit (3), detected electric-current values obtained by a detected phase-current calculation unit (15), and an electrical angle calculated by an electrical angle operation unit (14); and a cutoff management unit (17) for halting a drive operation of the motor (10) if its output torque is abnormal.

FIG. 1

**Description**

TECHNICAL FIELD

The disclosure of the present application relates to an electric motor control device, and to an electric power steering device using the motor control device.

BACKGROUND ART

In general, with an electric motor of multiple phases, a failure detection device is provided for the purpose of detecting a malfunction or failure. When the failure detection device detects a failure, a drive operation of the motor is halted in order not to allow the motor performing the operations which are not intended.

However, in a case in which it is possible to continue a drive operation of a motor in a failure being detected, it is desirable to continue a drive operation thereof; however, there arises a problem in that a conventional failure detection device cannot distinguish go/no-go determination of the continuity in a drive operation of a motor with respect to a failure being detected, so that a drive operation of the motor results in being halted at a time-point when the failure is detected.

In order to solve the problem, such a motor control device is proposed in Patent Document 1 that determination is performed on go/no-go determination of the continuity in a drive operation of a motor with respect to a failure being detected by means of a failure detection device, so that a drive operation of the motor is continued when it is possible to do so; and, in the proposed motor control device, when electric-current value abnormality is detected from detected electric-currents detected by electric current detection means provided for a motor through electric-current value abnormality detection means, a drive operation of the motor is continued by changing over a detected electric-currents to an estimation electric-current in a case in which the electric-current value abnormality is a failure due to the electric current detection means in itself.

RELATED ART DOCUMENT

Patent Document

Patent Document 1: Japanese Patent Publication No. 5092538

SUMMARY OF THE INVENTION

Problems to be Solved by the Invention

As described above, in a motor control device disclosed in Patent Document 1, electric current detection means is defined as a subject matter in a failure detection device disclosed, and, at a time when the electric current detection means detects abnormality of a detected electric-current value (s), determination is performed so that a drive operation of a motor can be continued only when the abnormality occurrence cause is due to the electric current detection means in itself, so that there arises a problem in that the determination cannot be performed on go/no-go determination of the continuity in a drive operation of the motor depending on the magnitude of an influence in which a failure being caused gives to an output (system) of the motor control device.

The present disclosure in the application concerned has been directed at solving those problems or issues as described above, an object of the disclosure is to obtain an electric motor control device which is appropriately capable of performing go/no-go determination of the continuity in a drive operation of a motor even when abnormality is caused in output torque of the motor.

Means for Solving the Problems

An electric motor control device disclosed in the disclosure of the application concerned comprises: an electric-current instruction calculation unit for determining target electric-current values of a motor of multiple phases; a detected phase-current calculation unit for obtaining detected electric-current values by detecting electric currents of phases each flowing through the motor; a control calculation unit for calculating electric-current instructions to control motor electric-currents each on the basis of the target electric-current values and on that of the detected electric-current values; an electrical angle calculation unit for calculating, from a rotor's rotational position of the motor, an electrical angle being a phase difference between a rotational position of the rotor of the motor and a coil of the motor; an abnormal torque estimation unit for estimating abnormality of torque of the motor from the target electric-current values, the detected electric-current values and the electrical angle; and a cutoff management unit for halting a drive operation of the motor if the torque thereof is abnormal.

Effects of the Invention

According to the motor control device disclosed in the disclosure of the application concerned, it is possible to appropriately perform go/no-go determination of the continuity in a drive operation of a motor even when abnormality is caused in output torque of the motor.

BRIEF DESCRIPTION OF DRAWINGS

FIG. 1 is a block diagram illustrating an electric power steering device provided with an electric motor control device according to Embodiment 1;
FIG. 2 is a diagram illustrating the general outlines of the operations of the electric power steering device according to Embodiment 1;
FIG. 3 is a diagram schematically showing an overview of a time chart of target electric-currents of a motor and detected electric-currents thereof in operational processing of the electric power steering device according to Embodiment 1;
FIG. 4 is a block-line diagram illustrating, by way of one example, a processing configuration of an abnormal torque estimation unit in the electric power steering device according to Embodiment 1;
FIG. 5 is a flow chart showing processing contents in the abnormal torque estimation unit of the electric power steering device according to Embodiment 1;
FIG. 6 is a flow chart showing calculation processing contents of electric current deviations in the abnormal torque estimation unit of the electric power steering device according to Embodiment 1;
FIG. 7 is a flow chart showing the processing for selecting a minimum value of electric current deviation in the abnormal torque estimation unit of the electric power steering device according to Embodiment 1;
FIG. 8 is a flow chart showing the processing for selecting a maximum value of electric current deviation in the abnormal torque estimation unit of the electric power steering device according to Embodiment 1;
FIG. 9 is a diagram schematically showing an overview of a time chart in a case in which deviations are caused between target electric-currents of a motor and detected electric-currents thereof in operational processing of the electric power steering device according to Embodiment 1;
FIG. 10 is a diagram schematically showing an overview of a time chart of electrical angles $\theta$ in operational processing of the electric power steering device according to Embodiment 1;
FIG. 11 is a block-line diagram illustrating, by way of another example, a processing configuration of the abnormal torque estimation unit in the electric power steering device according to Embodiment 1;
FIG. 12 is a flow chart showing processing contents in an abnormal torque estimation-value calculation process of FIG. 11;
FIG. 13 is a flow chart showing internal processing of a cutoff management unit in the electric power steering device according to Embodiment 1;
FIG. 14 is a diagram showing, by way of one example, a hardware configuration of the motor control device according to the embodiments each;
FIG. 15 is a block diagram illustrating an electric power steering device provided with an electric motor control device according to Embodiment 2;
FIG. 16 is a flow chart showing processing contents of an open failure determination unit in the electric power steering device according to Embodiment 2;
FIG. 17 is a flow chart showing processing contents of phase-U open-failure determination processing in the open failure determination unit of the electric power steering device according to Embodiment 2;
FIG. 18 is a flow chart showing processing contents of phase-V open-failure determination processing in the open failure determination unit of the electric power steering device according to Embodiment 2;
FIG. 19 is a flow chart showing processing contents of phase-W open-failure determination processing in the open failure determination unit of the electric power steering device according to Embodiment 2;
FIG. 20 is a flow chart showing internal processing of a cutoff management unit in the electric power steering device according to Embodiment 2;
FIG. 21 is a schematic diagram in which a motor is shown as a simple resistor model;
FIG. 22 is a schematic diagram in which the motor is shown as a simple resistor model at a time when a phase-U open failure is caused;
FIG. 23 is a schematic diagram of target three-phase currents at a normal time; and

FIG. 24 is a schematic diagram of detected three-phase currents at a time when a phase-U open failure is caused.

EMBODIMENTS FOR CARRYING OUT THE INVENTION

Hereinafter, the explanation will be made referring to the drawings for preferred exemplary embodiments of an electric motor control device, and for an electric power steering device provided with the motor control device.

Embodiment 1.

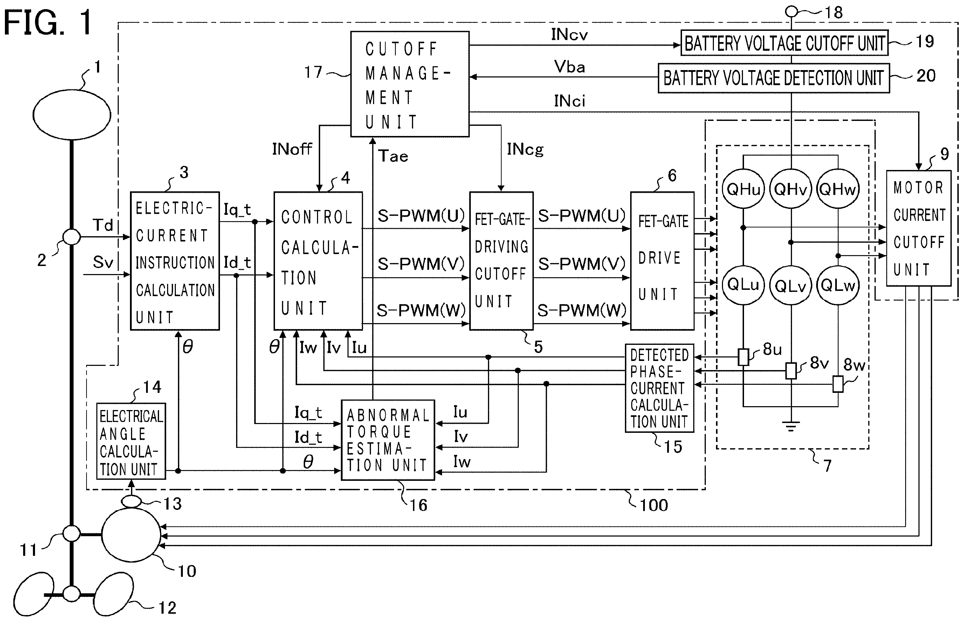

FIG. 1 is an overall diagram illustrating, by way of one exemplary embodiment, a configuration of an electric power steering device according to Embodiment 1; and the electric power steering device is provided with an electric motor control device 100 including an electric-current instruction calculation unit 3 for controlling output torque of an electric motor 10 which is connected to a gear 11 and which outputs steering assist torque for assisting the steering of an operator or driver, on the basis of detection torque Td being outputted by a torque detector 2 for detecting steering torque, from the driver, being acted onto a steering wheel 1 of an automotive vehicle on which the driver steers and for externally outputting the detected torque as an electrical signal (the detection torque Td), so that vehicle's wheels 12 are steered in accordance with steering torque of the driver and with the steering assist torque in which the motor 10 outputs. The electric-current instruction calculation unit 3 determines target electric-current values corresponding to motor electric-current values of the motor 10.

The motor 10 is a multiple phase motor made of, for example, a surface-permanent-magnet three-phase brushless motor of a star connection in which one end-terminal of a phase-U coil, that of a phase-V coil and that of a phase-W coil are mutually connected one another, and the other end-terminal of the each coil is connected to an electric motor driving device 7 by way of an electric motor current cutoff unit 9, so that, by means of the motor driving device 7, electric motor drive-operation voltages are applied to the individual coils, and so, electric currents flow through the individual coils in accordance with the voltages applied to the individual phases.

A rotor's rotational position detector 13 detects a rotor's rotational position of the motor 10, and an electrical angle calculation unit 14 calculates, from the rotor's rotational position detected by the rotor's rotational position detector 13, an electrical angle $\theta$ being a phase difference between the rotor's rotational position and the three-phase coils.

The motor driving device 7 is connected to the motor 10 by way of the motor current cutoff unit 9. And, the motor driving device is constituted of, for example: two field-effect transistors QHu and QLu connected in series with each other, and, connected in parallel with the series-connected circuit, a series-connected circuit of two field-effect transistors QHv and QLv; and also in a similar manner, a series-connected circuit of field-effect transistors QHw and QLw. In the motor driving device, pulse width modulation (PWM) signals being outputs from a control calculation unit 4 are converted by an FET-gate drive unit 6 being, for example, an FET driver IC into voltage levels capable of performing gate drives of the field-effect transistors QHu, QLu, QHv, QLv, QHw and QLw each within the motor driving device 7 connected at the subsequent stage. In accordance with gate drive signals being output signals from the FET-gate drive unit 6 after the conversion, these field-effect transistors (FETs) QHu, QLu, QHv, QLv, QHw and QLw are driven, whereby predetermined phase voltages are applied to the individual coils of the motor 10 connected at the subsequent stage, so that torque is produced in the motor 10 by flowing phase currents through the motor 10.

Moreover, the motor driving device 7 is provided with shunt resistors 8u, 8v and 8w for detecting the phase currents.

A detected phase-current calculation unit 15 calculates phase currents $I_u$, $I_v$ and $I_w$ flowing through the individual phase coils of the motor 10 in accordance with values detected by the shunt resistors 8u, 8v and 8w.

The electric-current instruction calculation unit 3 calculates a q-axis electric-current instruction and a d-axis electric-current instruction being electric current instructions on the rotational two axes (d-axis and q-axis) from detection torque Td detected by means of the torque detector 2, from a vehicle speed signal Sv acquired by means of an external device or apparatus, and from a motor revolution number calculated by using an electrical angle $\theta$ from the electrical angle calculation unit 14. The q-axis electric-current instruction is indicated as a target q-axis current $I_{q\_t}$, and the d-axis electric-current instruction is indicated as a target d-axis current $I_{d\_t}$.

When an output signal from a cutoff management unit 17 is not at a forced PWM-signal turn-off instruction INoff, the control calculation unit 4 carries out publicly known control-calculation processing, for example, PI control processing by using a target q-axis current $I_{q\_t}$ and a target d-axis current $I_{d\_t}$ each of which is an output signal from the electric-current instruction calculation unit 3 and by using detected electric-currents $I_{q\_m}$ and $I_{d\_m}$ in which individual phase detected electric-currents $I_u$, $I_v$ and $I_w$ being output signals of the detected phase-current calculation unit 15 are performed through three- to two-phase transformation into the electric currents on the rotational two axes (d-axis and q-axis) ; and the control calculation unit forms a phase-U PWM signal S-PWM(U), a phase-V PWM signal S-PWM(V) and a phase-W PWM signal S-PWM(W) corresponding to the processing-calculation results, which are outputted into an FET-gate-driving cutoff unit 5 at the subsequent stage. When an output signal from the cutoff management unit 17 is at a forced PWM-signal turn-off instruction INoff, the control calculation unit forms a phase-U PWM signal S-PWM (U), a phase-V PWM signal S-PWM(V) and a phase-W PWM signal S-PWM(W) by which each phase of the motor 10 is not energized without depending on a target q-axis current $I_{q\_t}$ and a target d-axis current $I_{d\_t}$ each of which is an output signal from the electric-current instruction calculation unit 3 and without depending on the detected electric-currents $I_{q\_m}$ and $I_{d\_m}$ in which individual phase detected electric-currents $I_u$, $I_v$ and $I_w$ being output signals of the detected phase-current calculation unit 15 are performed through three- to two-phase transformation into the electric currents on the rotational two axes (d-axis and q-axis), so that the control calculation unit outputs such a phase-U PWM signal S-PWM(U), such a phase-V PWM signal S-PWM(V) and such a phase-W PWM signal S-PWM(W) into the FET-gate-driving cutoff unit 5 at the subsequent stage.

The motor current cutoff unit 9 is inserted in an electric current path between the motor driving device 7 and the motor 10, and the motor current cutoff unit interrupts the electric current path by obeying a motor current cutoff instruction INci from the cutoff management unit 17, whereby output torque of the motor 10 is made to 0 (zero).

The FET-gate-driving cutoff unit 5 is placed in a path between the control calculation unit 4 and the FET-gate drive unit 6; and the FET-gate-driving cutoff unit is provided with the function to forcefully turn off a phase-U PWM signal S-PWM (U), a phase-V PWM signal S-PWM (V) and a phase-W PWM signal S-PWM(W) into the FET-gate drive unit 6 by obeying an FET-gate-driving cutoff instruction INcg from the cutoff management unit 17, and, for example, by halting gate drives of an FET-gate driver IC being the FET-gate drive unit 6, so that phase voltage supplies into the coils each of the motor 10 are halted in accordance with the function.

The electric-current instruction calculation unit 3 calculates a target q-axis current $I_{q\_t}$ and a target d-axis current $I_{d\_t}$ being electric current instructions on the rotational two axes (d-axis and q-axis) from at least detection torque Td detected by means of the torque detector 2, from a vehicle speed signal Sv acquired by means of an external device or apparatus, and from a motor revolution number calculated by using an electrical angle $\theta$ from the electrical angle calculation unit 14.

A battery voltage detection unit 20 is provided with the function to detect a voltage of a battery 18 whose voltage is inputted into the motor 10; and a battery voltage being detected by the battery voltage detection unit is inputted into the cutoff management unit 17.

A battery voltage cutoff unit 19 is provided with the function to interrupt a battery voltage being applied to the motor driving device 7 by obeying a battery voltage cutoff instruction INcv from the cutoff management unit 17.

An abnormal torque estimation unit 16 is provided with the function to estimate abnormal torque of the motor 10 in accordance with a target q-axis current $I_{q\_t}$ and a target d-axis current $I_{d\_t}$ each being outputs of the electric-current instruction calculation unit 3, phase currents $I_u$, $I_v$ and $I_w$ each being outputs of the detected phase-current calculation unit 15, and an electrical angle $\theta$ being an output of the electrical angle calculation unit 14. Depending on the function, at a time when a failure or failures, for example, such a short circuit of a field-effect transistor(s) and an open failure thereof, and/or a short-to-power fault of a gate drive signal(s), a short-to-ground fault thereof and the like are caused in the FET-gate drive unit 6 and the motor driving device 7, phase currents flowing through the individual phase coils of the motor 10 become abnormal, whereby it is feared that an influence may be exerted with respect to output torque of the motor 10, and that, depending on the magnitude of the degree of influence, abnormal events may be brought about in such cases as vibration with respect to the steering wheel 1, the production of steering force in a reverse steering direction in response to the steering direction of an operator or driver (reverse or reciprocal assist), and the like. Hereinafter, the explanation will be made for an influence on output torque of the motor 10 in a case in which a surface-permanent-magnet three-phase brushless motor is used for.

In general, in a case of a surface permanent magnet type motor, output torque thereof can be given by Expression (1) using the number of pole pairs, P, of the motor, and using an actual q-axis current $I_{q\_r}$ flowing through the motor, and the maximum value of armature interlinkage magnetic-flux, $\phi$, by permanent magnets thereof.

[Expression Figure-1]

$$T = P\varphi I_{q\_r} \quad [\mathrm{Nm}] \qquad \cdots \ (1)$$

According to Expression (1), the number of pole pairs, P, of a motor and the maximum value of armature interlinkage magnetic-flux, $\phi$, by permanent magnets thereof are fixed values defined by the motor being used, and thus, it can be known that a factor which exerts a direct influence on the variation of output torque values during the rotation of the motor is an actual q-axis current $I_{q\_r}$ flowing through the motor.

An actual q-axis current $I_{q\_r}$ flowing through the motor 10 means a q-axis current at a time when actual individual phase currents $I_u\_r$, $I_v\_r$ and $I_w\_r$ flowing through the individual phases of the motor 10 are performed through three- to two-phase transformation; and so, when an electric current deviation is caused between the actual q-axis current $I_{q\_r}$

and a target q-axis current $I_{q\_t}$ owing to some kind of factor under the condition in which the torque is produced in the motor 10 in accordance with the aforementioned target q-axis current $I_{q\_t}$, a torque value corresponding to the electric current deviation is superimposed on the output torque of the motor 10, whereby abnormal torque is caused in the motor 10, so that steering torque of an operator or driver changes due to the abnormal torque being caused.

The abnormal torque estimation unit 16 calculates individual phase target currents $I_{u\_t}$, $I_{v\_t}$ and $I_{w\_t}$ of the motor 10 in accordance with a target q-axis current $I_{q\_t}$ and a target d-axis current $I_{d\_t}$ where the electric-current instruction calculation unit 3 outputs, and with an electrical angle $\theta$ where the electrical angle calculation unit 14 outputs; and the abnormal torque estimation unit estimates abnormal torque on the basis of individual phase detected electric-currents $I_u$, $I_v$ and $I_w$ calculated by the detected phase-current calculation unit 15. When electric current deviations between individual phase target currents and individual phase detected electric-currents are defined as $\Delta I_u$, $\Delta I_v$ and $\Delta I_w$, the following Expression (2), Expression (3) and Expression (4) are held, respectively. However, it is presumed that detection errors are not included in the individual phase detected electric-currents $I_u$, $I_v$ and $I_w$.

[Expression Figure-2]

$$I_u = I_{u\_t} + \Delta I_u \quad [\text{A}] \quad \cdots \ (2)$$

[Expression Figure-3]

$$I_v = I_{v\_t} + \Delta I_v \quad [\text{A}] \quad \cdots \ (3)$$

[Expression Figure-4]

$$I_w = I_{w\_t} + \Delta I_w \quad [\text{A}] \quad \cdots \ (4)$$

Expression (5) described below is a conversion expression of three- to two-phase transformation.
[Expression Figure-5]

$$\begin{pmatrix} I_d \\ I_q \end{pmatrix} = \sqrt{\frac{2}{3}} \begin{pmatrix} \cos\theta & \cos\left(\theta - \frac{2}{3}\pi\right) & \cos\left(\theta + \frac{2}{3}\pi\right) \\ \sin\theta & \sin\left(\theta - \frac{2}{3}\pi\right) & \sin\left(\theta + \frac{2}{3}\pi\right) \end{pmatrix} \begin{pmatrix} I_u \\ I_v \\ I_w \end{pmatrix} \cdots \ (5)$$

As described above, a d-axis current does not exert an influence on output torque of the motor 10, whereas a q-axis current appears in its influence on the output torque of the motor 10. Thus, the explanation will be made hereinafter for the q-axis current related to the output torque of the motor 10.

By substituting Expression (2) through Expression (4) described above into Expression (5), and expressing it by dividing into the terms including deviations of q-axis current and the terms not including the deviations thereof, Expression (6) can be obtained.
[Expression Figure-6]

$$I_q = -\sqrt{\frac{2}{3}}\left(I_{u\_t}\,sin(\theta) + I_{v\_t}\,sin\left(\theta - \frac{2}{3}\pi\right) + I_{w\_t}\,sin\left(\theta + \frac{2}{3}\pi\right)\right) -$$

$$\sqrt{\frac{2}{3}}\left(\Delta I_u sin(\theta) + \Delta I_v\,sin\left(\theta - \frac{2}{3}\pi\right) + \Delta I_w\,sin\left(\theta + \frac{2}{3}\pi\right)\right)[\text{A}] \ \cdots \ (6)$$

There results in showing that the first half portion of Expression (6) described above indicates a target q-axis current $I_{q\_t}$ from the electric-current instruction calculation unit 3, and that the latter half portion thereof indicates the deviation from a target q-axis current $I_{q\_t}$ obtained in the electric-current instruction calculation unit 3. Thus, when the deviation between the target q-axis current $I_{q\_t}$ of the electric-current instruction calculation unit 3 and a q-axis current calculated from individual phase currents of the motor 10 having been calculated by the detected phase-current calculation unit 15 is defined as "$\Delta Iq$," Expression (7) described below is given.

[Expression Figure-7]

$$\Delta I_q = -\sqrt{\frac{2}{3}}\left(\Delta I_u sin(\theta) + \Delta I_v \, sin\left(\theta - \frac{2}{3}\pi\right) + \Delta I_w \, sin\left(\theta + \frac{2}{3}\pi\right)\right) [A] \quad \cdots \quad (7)$$

By combining the three trigonometric functions of Expression (7) described above, and transforming it into one trigonometric function, the following Expression (8) is derived.

[Expression Figure-8]

$$\Delta I_q = -\sqrt{\frac{2}{3}}\sqrt{\Delta I_u^2 + \Delta I_v^2 + \Delta I_w^2 - \Delta I_u \Delta I_v - \Delta I_v \Delta I_w - \Delta I_w \Delta I_u} \, sin\left(\theta + \right.$$

$$\left. tan^{-1}\left(\frac{-\frac{\sqrt{3}}{2}\Delta I_v + \frac{\sqrt{3}}{2}\Delta I_w}{\left(\Delta I_u - \frac{1}{2}\Delta I_v - \frac{1}{2}\Delta I_w\right)}\right)\right) [A] \quad \cdots \quad (8)$$

According to Expression (8) described above, in a case in which an electric current deviation is caused between individual phase target currents of the motor 10 calculated in accordance with a target q-axis current $I_{q\_t}$ of the electric-current instruction calculation unit 3 and with an electrical angle $\theta$ where the electrical angle calculation unit 14 outputs, and individual phase detected electric-currents calculated by the detected phase-current calculation unit 15, there results in existing a possibility that the deviation of $\Delta I_{q\_amp}$ is caused in an actual q-axis current in which electric currents flowing through the motor 10 are performed through three- to two-phase transformation at the maximum with respect to the target q-axis current $I_{q\_t}$ of the electric-current instruction calculation unit 3, as given by Expression (9) described below. That is to say, there results in existing the possibility that actual torque where the motor 10 outputs in accordance with actual electric-currents, i.e. the torque corresponding to "$\Delta I_{q\_amp}$" is outputted as abnormal torque at the maximum with respect to the torque of the motor 10 outputted in accordance with a target q-axis current $I_{q\_t}$ where the electric-current instruction calculation unit 3 outputs.

[Expression Figure-9]

$$\Delta I_{q\_amp} = \sqrt{\frac{2}{3}\left(\Delta I_u^2 + \Delta I_v^2 + \Delta I_w^2 - \Delta I_u \Delta I_v - \Delta I_v \Delta I_w - \Delta I_w \Delta I_u\right)} [A] \quad \cdots \quad (9)$$

Next, the range will be shown in which the aforementioned $\Delta I_{q\_amp}$ is capable of taking on. When a minimum value of electric current deviations $\Delta I_u$, $\Delta I_v$ and $\Delta I_w$ is defined as an electric-current deviation minimum-value $\Delta I_{min}$, and difference values between the parameter $\Delta I_{min}$ and each of $\Delta I_u$, $\Delta I_v$ and $\Delta I_w$ are defined as electric-current deviation difference values $\Delta I'_u$, $\Delta I'_v$ and $\Delta I'_w$, Expression (10), Expression (11) and Expression (12) are held as described below, respectively.

[Expression Figure-10]

$$\Delta I'_u = \Delta I_u - \Delta I_{min} \; [A] \quad \cdots \quad (10)$$

[Expression Figure-11]

$$\Delta I'_v = \Delta I_v - \Delta I_{min} \; [A] \quad \cdots \quad (11)$$

[Expression Figure-12]

$$\Delta I'_{w} = \Delta I_{w} - \Delta I_{min} \ [A] \qquad \cdots (12)$$

In addition, because the aforementioned electric-current deviation minimum-value $\Delta I_{min}$ is the minimum value among the electric current deviations $\Delta I_u$, $\Delta I_v$ and $\Delta I_w$, a difference value from the parameter $\Delta I_{min}$ becomes 0 (zero) in any one among Expression (10) through Expression (12) described above.

In accordance with Expression (10) through Expression (12), and with Expression (9) described above, Expression (13) in which the aforementioned $\Delta I_{q\_amp}$ is expressed by using $\Delta I'_u$, $\Delta I'_v$ and $\Delta I'_w$ can be obtained as described below.

[Expression Figure-13]

$$\Delta I_{q\_amp} = \sqrt{\frac{2}{3}\left(\Delta I'^{2}_{u} + \Delta I'^{2}_{v} + \Delta I'^{2}_{w} - \Delta I'_{u}\Delta I'_{v} - \Delta I'_{v}\Delta I'_{w} - \Delta I'_{w}\Delta I'_{u}\right)} \ [A]$$

$$\cdots (13)$$

In accordance with electric-current deviations $\Delta I_u$, $\Delta I_v$ and $\Delta I_w$, and with an electric-current deviation minimum-value $\Delta I_{min}$, it is indicated that a maximum value among electric-current deviation difference values $\Delta I'_u$, $\Delta I'_v$ and $\Delta I'_w$ is defined as an electric-current deviation difference maximum-value $\Delta I_{max}$; and herein, by presuming that the correlation among the values of $\Delta I_u$, $\Delta I_v$ and $\Delta I_w$ being electric current deviations is given as "$\Delta I_u \leq \Delta I_w \leq \Delta I_v$," Expression (14), Expression (15) and Expression (16) can be obtained as described below, respectively.

[Expression Figure-14]

$$\Delta I'_{u} = \Delta I_{min} - \Delta I_{min} = 0 \qquad \cdots (14)$$

[Expression Figure-15]

$$\Delta I'_{v} = \Delta I_{max} - \Delta I_{min} \qquad \cdots (15)$$

[Expression Figure-16]

$$\Delta I_{min} - \Delta I_{min} \leq \Delta I_{w} \leq \Delta I_{max} - \Delta I_{min}$$

$$0 \leq \Delta I'_{w} \leq \Delta I_{max} - \Delta I_{min} \qquad \cdots (16)$$

By substituting Expression (14) and Expression (15) described above into Expression (13), and by performing expressional transformation where "$\Delta I_{Diff} = \Delta I_{max} - \Delta I_{min}$," Expression (17) described below can be obtained.

[Expression Figure-17]

$$\Delta I_{q\_amp} = \sqrt{\frac{2}{3}\left(\left(\Delta I'_{w} - \frac{1}{2}\Delta I_{Diff}\right)^{2} + \frac{3}{4}\Delta I_{Diff}^{2}\right)} \qquad \cdots (17)$$

In Expression (17) described above, the condition where the aforementioned $\Delta I_{q\_amp}$ takes on the maximum is at the time of "$\Delta I'_w = 0$," or at that of "$\Delta I'_w = \Delta I_{Diff}$," so that the aforementioned $\Delta I_{q\_amp}$ is given by Expression (18) described below.

[Expression Figure-18]

$$\sqrt{\frac{2}{3}}\Delta I_{Diff} \quad [A] \qquad\qquad \cdots (18)$$

In addition, the condition where the aforementioned $\Delta I_{q\_amp}$ takes on the minimum is at the time of "$\Delta I'_w = \Delta I_{Diff} / 2$," so that the aforementioned $\Delta I_{q\_amp}$ at this time is given by Expression (19) described below.
[Expression Figure-19]

$$\sqrt{\frac{1}{2}}\Delta I_{Diff} \quad [A] \qquad\qquad \cdots (19)$$

According to Expression (18) and Expression (19) described above, the range in which the aforementioned $\Delta I_{q\_amp}$ can take on is given by Expression (20) described below by using individual phase target currents of the motor 10 calculated in accordance with a target q-axis current $I_{q\_t}$ of the electric-current instruction calculation unit 3 and with an electrical angle $\theta$ where the electrical angle calculation unit 14 outputs, and using parameter "$\Delta I_{Diff}$" being the difference between parameter "$\Delta I_{min}$" being the minimum value of electric current deviations $\Delta I_u$, $\Delta I_v$ and $\Delta I_w$ between individual phase detected electric-currents calculated by the detected phase-current calculation unit 15, and parameter "$\Delta I_{max}$" being the maximum value of the electric current deviations therebetween.
[Expression Figure-20]

$$\sqrt{\frac{1}{2}}\Delta I_{Diff} \leq \Delta I_{q\_amp} \leq \sqrt{\frac{2}{3}}\Delta I_{Diff} \quad [A] \qquad \cdots (20)$$

Therefore, the abnormal torque estimation unit 16 can estimate a maximum value (abnormal torque) of steering-shaft converted abnormal torque capable of being produced in the motor 10, $T_{emu}$, according to Expression (21) described below, by giving a torque constant $K_m$ [Nm/A] which is the correlation between a q-axis current flowing through the motor 10 and its torque being outputted, and giving a motor reduction ratio $G_{gear}$ of the gear 11.
[Expression Figure-21]

$$T_{emu} = \sqrt{\frac{2}{3}}\Delta I_{Diff} K_m G_{gear} \; [Nm] \qquad \cdots (21)$$

Because the torque constant $K_m$ [Nm/A] and the motor reduction ratio $G_{gear}$ of the gear 11 are constants each, an output of the abnormal torque estimation unit 16 may be defined as parameter "$\Delta I_{Diff}$" being a value which corresponds to the abnormal torque. In the explanation stated above, the explanation has been made for the parameter $\Delta I'_u$ as the minimum value $\Delta I_{min}$ exactly as Expression (14) described above; however, even when parameter $\Delta I'_v$ takes on the minimum value $\Delta I_{min}$, or even when parameter $\Delta I'_w$ takes on the minimum value $\Delta I_{min}$, the range in which Expression (20) described above is capable of taking on does not change, so that Expression (21) does not also change.
Abnormality of an electric power steering device is defined in accordance with a steering torque change-quantity of an operator or driver. Hereinafter, the explanation will be made for a method for determining abnormality of the electric power steering device by means of abnormal torque estimated by the abnormal torque estimation unit 16.
Firstly, the explanation will be made briefly for the operations of the electric power steering device. When an operator or driver steers the steering wheel 1, the vehicle's wheels 12 are steered, so that pieces of road-surface load torque are produced in the vehicle's wheels 12 each of which try to return toward their midpoints. At a time when the motor 10 is not outputting its steering assist torque, these pieces of road-surface load torque act as a steering torque of the driver. The steering torque of the driver is detected by means of the torque detector 2; and then, the steering torque being detected is inputted into the electric-current instruction calculation unit 3, so that a target q-axis current $I_{q\_t}$ and a target d-axis current $I_{d\_t}$ are outputted therefrom. The target q-axis current $I_{q\_t}$ and the target d-axis current $I_{d\_t}$ are inputted into the control calculation unit 4; and then, the control calculation unit 4 controls electric currents flowing through the motor 10 by means of the FET-gate drive unit 6 and the motor driving device 7 so that the values in which phase currents detected by the detected phase-current calculation unit 15 are transformed into a q-axis current and a d-axis current coincide with the target q-axis current $I_{q\_t}$ and the target d-axis current $I_{d\_t}$. The motor 10 outputs its torque in accordance with a q-axis component of the electric currents flowing through the motor. The output torque of the motor 10 becomes, by way of the gear 11, steering assist torque which acts to assist the steering torque by the driver.

When steering torque by the driver is defined as "Th," and the relationship of steering assist torque produced by an output of the torque detector 2 is defined in a proportional relationship of a simple proportional gain "G" for brevity of explanation, and when road-surface load torque is defined as "Ta," a relational expression of Expression (22) described below can be obtained.

[Expression Figure-22]

$$Th + GTh = Ta \; [\text{Nm}] \qquad \cdots (22)$$

The explanation will be made for a change of steering torque of an operator or driver as a result of causing abnormality in the FET-gate drive unit 6 and/or the motor driving device 7, at a time when an electric current does not flow through the motor 10 exactly as a target q-axis current $I_{q\_t}$ of the electric-current instruction calculation unit 3 through the motor 10. In a case in which an electric current does not flow through the motor 10 exactly as a target q-axis current $I_{q\_t}$, steering-shaft converted torque of output torque of the motor 10 causes the deviation of "$\Delta T$" with respect to steering-shaft converted torque in a case in which the electric current flows through the motor 10 exactly as the target q-axis current $I_{q\_t}$. Due to the deviation being caused, steering torque of the driver changes to "Th' ." Steering torque of the driver having been changed is detected by means of the torque detector 2, and the steering torque being detected is inputted into the electric-current instruction calculation unit 3, so that a target q-axis current $I_{q\_t}$ is calculated, and so, target output torque of the motor 10 takes on "GTh'" in accordance with steering shaft conversion. Because output torque of the motor 10 due to abnormality in accordance with the steering shaft conversion has the deviation of "$\Delta T$" with respect to the target output torque, the output torque of the motor 10 in accordance with the steering shaft conversion takes on "GTh' + $\Delta T$." On the other hand, the road-surface load torque Ta does not change, and thus, a relational expression of Expression (23) described below can be obtained.

[Expression Figure-23]

$$Th' + GTh' + \Delta T = Ta \; [\text{Nm}] \qquad \cdots (23)$$

With respect to Expression (23) described above, Expression (22) described above is substituted so that the road-surface load torque Ta is cancelled, and expressional transformation is performed, whereby the following Expression (24) can be obtained.

[Expression Figure-24]

$$Th - Th' = \frac{\Delta T}{1+G} \; [\text{Nm}] \qquad \cdots (24)$$

The left-hand side of Expression (24) described above indicates a difference value at a time when steering torque of a driver changes from a state of "Th" to that of "Th'" because of abnormal torque $\Delta T$ in accordance with steering shaft conversion which is caused in the motor 10, and thus, it is possible to express the left-hand side thereof as the quantity of change in steering torque, $\Delta Th$, of the driver at the time of causing the abnormal torque $\Delta T$ in the motor 10 in accordance with the steering shaft conversion, so that the relational expression can be given by Expression (25) described below.

[Expression Figure-25]

$$\Delta Th = Th - Th' \; [\text{Nm}] \cdots (25)$$

By using Expression (24) and Expression (25) described above, a relational expression between steering-shaft converted abnormal torque $\Delta T$ being caused in the motor 10 and a steering torque change-quantity $\Delta Th$ of a driver can be obtained by Expression (26) described below.

[Expression Figure-26]

$$\Delta T = \Delta Th(1 + G) \text{ [Nm]} \qquad \cdots \text{ (26)}$$

Meanwhile, as a result of causing abnormality in the FET-gate drive unit 6 and/or the motor driving device 7, steering-shaft converted abnormal torque of the motor 10, which may possibly be caused at a time when an electric current(s) does not flow through the motor 10 exactly as a target q-axis current $I_{q\_t}$ of the electric-current instruction calculation unit 3 through the motor 10, is exactly given as in Expression (21) . Therefore, a steering torque change-quantity $\Delta Th$ of the driver which may possibly be caused due to the abnormality is given by Expression (27) described below, by using abnormal torque $T_{emu}$ estimated by the abnormal torque estimation unit 16.
[Expression Figure-27]

$$\Delta Th = \frac{T_{emu}}{1+G} \text{ [Nm]} \qquad \cdots \text{ (27)}$$

Thus, when a steering torque change-quantity of the driver in which determination is performed so that an electric power steering device is "abnormal" is defined as "$\Delta Th_{th}$," abnormality of the electric power steering device can be determined, in accordance with abnormal torque $T_{emu}$ estimated by the abnormal torque estimation unit 16, by Expression (28) described below.
[Expression Figure-28]

$$T_{emu} \geq \Delta Th_{th}(1 + G)\text{[Nm]} \quad \cdots \text{ (28)}$$

Expression (21) is substituted into "$T_{emu}$" of Expression (28) described above, and expressional transformation is performed, whereby, by using parameter $\Delta I_{Diff}$ which is calculated in the process of estimating abnormal torque by the abnormal torque estimation unit 16, Expression (29) described below can be obtained by which the determination is performed on an electric power steering device so that it is abnormal.
[Expression Figure-29]

$$\Delta I_{Diff} \geq \sqrt{\frac{3}{2}\frac{\Delta Th_{th}(1+G)}{K_m G_{gear}}} \text{ [A]} \qquad \cdots \text{ (29)}$$

In accordance with Expression (29) described above, it is possible to give a relational expression between a steering torque change-quantity $\Delta Th$ and the maximum deviation $\Delta I_{Diff}$, so that it becomes possible to indirectly estimate abnormal torque by calculating an electric-current deviation difference maximum-value $\Delta I_{Diff}$ and by monitoring it.

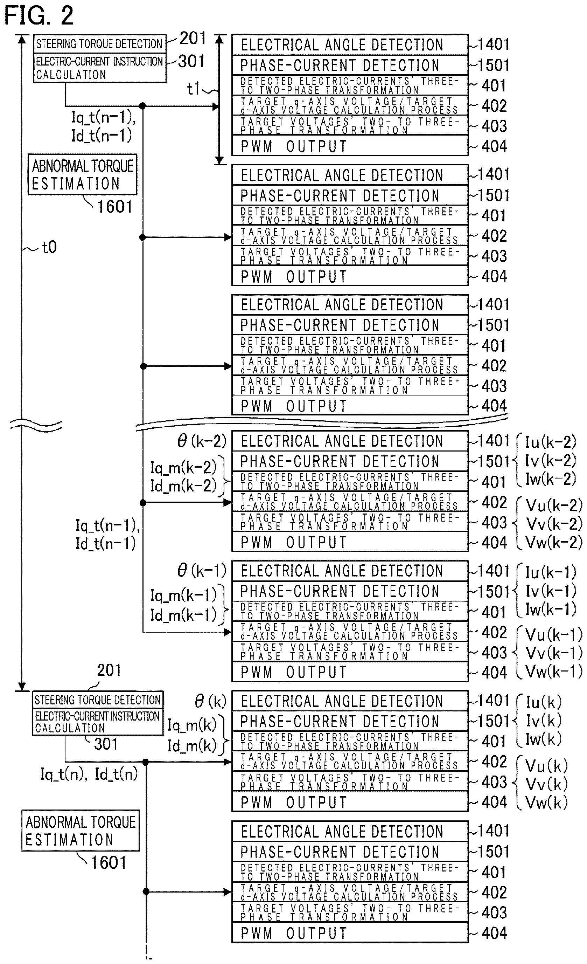

FIG. 2 is a diagram illustrating the general outlines of the operations of the electric power steering device according to Embodiment 1. Steering torque of an operator or driver is acquired in a steering torque detection process 201 by means of the torque detector 2 shown in FIG. 1, and, by means of the electric-current instruction calculation unit 3, a target q-axis current $I_{q\_t}$ and a target d-axis current $I_{d\_t}$ are calculated in an electric-current instruction calculation process 301 in accordance with the steering torque (detection torque Td shown in FIG. 1) detected in the steering torque detection process 201, and with a vehicle speed signal Sv shown in FIG. 1. The steering torque detection process 201 and the electric-current instruction calculation process 301 are repeatedly carried out on a period t0 basis.

On the basis of a detection signal from the rotor's rotational position detector 13, an electrical angle is detected in an electrical angle detection process 1401 by means of the electrical angle calculation unit 14. By means of the detected phase-current calculation unit 15, phase currents of the individual phases are calculated in a detected phase-current detection process 1501. In a detected electric-currents' three- to two-phase transformation process 401 of the control calculation unit 4, a detected q-axis current $I_{q\_m}$ and a detected d-axis current $I_{d\_m}$ are calculated in accordance with an output of the electrical angle detection process 1401 and with that of the detected phase-current detection process 1501. In a target q-axis voltage/target d-axis voltage calculation process 402, a target q-axis voltage is calculated so that a target q-axis current $I_{q\_t}$ of the electric-current instruction calculation process 301 is made coincident with a detected q-axis current $I_{q\_m}$ of the detected electric-currents' three- to two-phase transformation process 401 each other, by using the processing of, for example, a PI feedback control or the like. In addition, a target d-axis voltage is calculated so that a target d-axis current $I_{d\_t}$ of the electric-current instruction calculation process 301 is made coincident with the detected d-axis current $I_{d\_m}$ of the detected electric-currents' three- to two-phase transformation process 401 each other, by using the processing of, for example, the PI feedback control or the like. The target q-axis voltage and the target d-axis voltage described above are transformed in accordance with target voltages' two- to three-phase transformation 403 into three-phase voltages to be applied to the motor 10, and, in a PWM output process 404, PWM signals are outputted into the FET-gate-driving cutoff unit 5 shown in FIG. 1. The electrical angle detection process 1401, the detected phase-current detection process 1501, the detected electric-currents' three- to two-phase transformation process 401, the target q-axis voltage/target d-axis voltage calculation process 402, the target voltages' two- to three-phase transformation 403 and the PWM output process 404 are repeatedly carried out on a period t1 basis which is shorter than the period t0 described above.

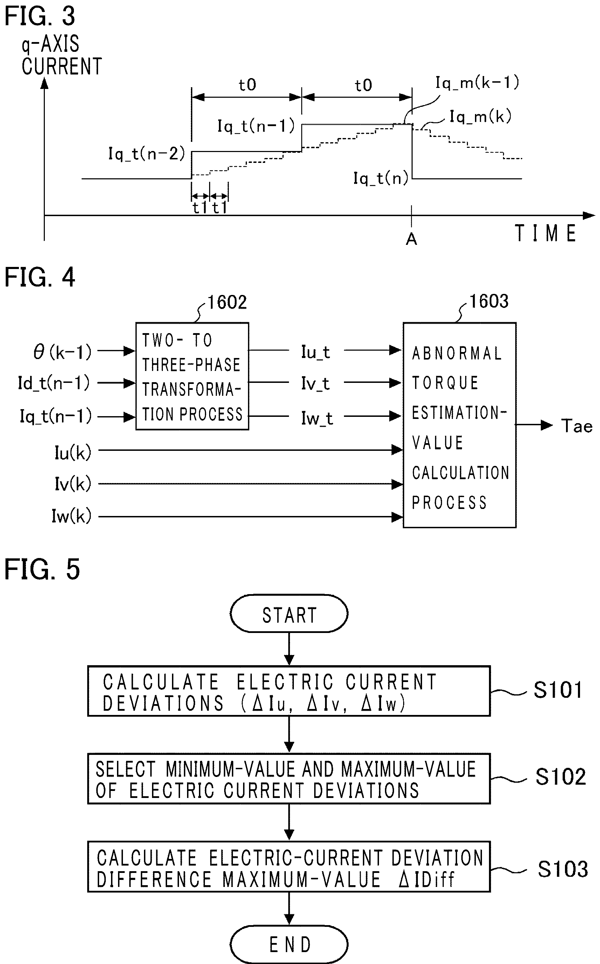

FIG. 3 is a diagram schematically showing an overview of a time chart of target q-axis currents $I_{q\_t}$ and detected q-axis currents $I_{q\_m}$ in the processing having been explained by FIG. 2. As described before, it is shown in the figure that a target q-axis current $I_{q\_t}$ is updated in its value on the period t0 basis, and that applied voltages of the motor 10 are controlled on the period t1 basis so that a detected q-axis current $I_{q\_m}$ is made coincident with the target q-axis current $I_{q\_t}$ each other. Therefore, at a time-point when the target q-axis current $I_{q\_t}$ is updated, the deviation is caused between a target q-axis current $I_{q\_t}(n)$ and a detected q-axis current $I_{q\_m}(k)$ ; meanwhile thereat, the deviation between a target q-axis current $I_{q\_t}(n - 1)$ before time t0 and the detected q-axis current $I_{q\_m}(k)$ becomes smaller. Because it can be similarly considered also for the relationship between a target d-axis current $I_{d\_t}(n - 1)$ before the time t0 and a detected d-axis current $I_{d\_m}(k)$, it can be considered that the deviation becomes the smallest. In addition, because three-phase voltages $V_u(k - 1)$, $V_v(k - 1)$ and $V_w(k - 1)$ to be applied to the motor 10 are calculated in the processing which is carried out on a period t1 basis by using an electrical angle of $\theta(k - 1)$ for detected phase currents $I_u(k)$, $I_v(k)$ and $I_w(k)$ at a time-point when the $I_{q\_t}(n)$ is updated, and because phase currents are made flowed in accordance with these three-phase voltages, it can be considered that the deviations each between target phase currents $I_{u\_t}$, $I_{v\_t}$ and $I_{w\_t}$, calculated by using a target q-axis current $I_{q\_t}(n - 1)$ before time t0 and a target d-axis current $I_{d\_t}(n - 1)$ before the time t0 and by using the electrical angle $\theta(k - 1)$ before time t1, and detected phase currents $I_u(k)$, $I_v(k)$ and $I_w(k)$ are small. Because of this, it is preferable to carry out, after having carried out the electric-current instruction calculation process 301, the processing of abnormal torque estimation 1601 in the abnormal torque estimation unit 16 by defining as inputs the target phase currents $I_{u\_t}$, $I_{v\_t}$ and $I_{w\_t}$ calculated by using the target q-axis current $I_{q\_t}(n - 1)$ at the time t0 before and the target d-axis current $I_{d\_t}(n - 1)$ thereat, and by using the electrical angle $\theta(k - 1)$ before the time t1, and also by defining as inputs the detected phase currents $I_u(k)$, $I_v(k)$ and $I_w(k)$.

The explanation will be made referring to FIG. 4 for an example of the processing of abnormal torque estimation 1601. As illustrated in the figure, the processing of a two- to three-phase transformation process 1602 and that of an abnormal torque estimation-value calculation process 1603 are carried out.

In the two- to three-phase transformation process 1602, an electrical angle $\theta(k - 1)$ of the electrical angle detection process 1401, and a target q-axis current $I_{q\_t}(n - 1)$ of the electric-current instruction calculation process 301 and a target d-axis current $I_{d\_t}(n - 1)$ thereof are inputted, so that their two- to three-phase transformation is carried out by using Expression (30) described below, and that a target phase-U current $I_{u\_t}$, a target phase-V current $I_{v\_t}$ and a target phase-W current $I_{w\_t}$ are outputted.

[Expression Figure-30]

$$\begin{pmatrix} I_{u\_t} \\ I_{v\_t} \\ I_{w\_t} \end{pmatrix} = \sqrt{\frac{2}{3}} \begin{pmatrix} \cos\theta(k-1) & -\sin\theta(k-1) \\ \cos\left(\theta(k-1)-\frac{2}{3}\pi\right) & -\sin\left(\theta(k-1)-\frac{2}{3}\pi\right) \\ \cos\left(\theta(k-1)+\frac{2}{3}\pi\right) & -\sin\left(\theta(k-1)+\frac{2}{3}\pi\right) \end{pmatrix} \begin{pmatrix} I_{d\_t}(n-1) \\ I_{q\_t}(n-1) \end{pmatrix} [A]$$

$$\cdots (30)$$

In the abnormal torque estimation-value calculation process 1603, an electric-current deviation difference maximum-value $\Delta I_{Diff}$ corresponding to an abnormal torque estimation value Tae is calculated in accordance with a target phase-U current $I_{u\_t}$ of the two- to three-phase transformation process 1602, a target phase-V current $I_{v\_t}$ thereof and a target phase-W current $I_{w\_t}$ thereof, and with a phase-U detected electric-current $I_u(k)$ of the detected phase-current calculation unit 15, a phase-V detected electric-current $I_v(k)$ thereof and a phase-W detected electric-current $I_w(k)$ thereof.

The explanation will be made referring to FIG. 5 for processing contents in the abnormal torque estimation-value calculation process 1603. At Step S101 shown in FIG. 5, the calculation of electric current deviations ($\Delta I_u$, $\Delta I_v$ and

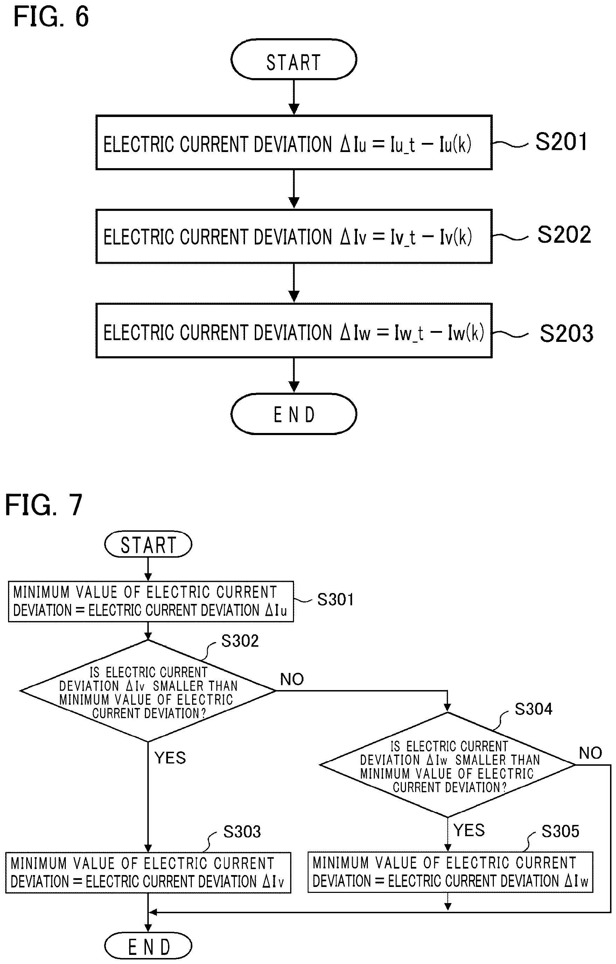

$\Delta I_w$) is carried out. The detailed processing of Step S101 is constituted of Steps S201, S202 and S203 shown in FIG. 6; and a phase-U detected electric-current $I_u(k)$, a phase-V detected electric-current $I_v(k)$ and a phase-W detected electric-current $I_w(k)$ are individually subtracted in each phase from a target phase-U current $I_{u\_t}$, a target phase-V current $I_{v\_t}$ and a target phase-W current $I_{w\_t}$ shown in FIG. 4, so that electric current deviations $\Delta I_u$, $\Delta I_v$ and $\Delta I_w$ are calculated, respectively.

At Step S102 shown in FIG. 5, minimum-value and maximum-value selection of electric current deviations calculated is carried out on an every phase basis. The detailed processing of minimum-value selection at Step S102 is exactly shown as in FIG. 7; and first, the aforementioned electric current deviation $\Delta I_u$ is substituted as a minimum value of electric current deviation at Step S301 in FIG. 7, and a minimum value of electric current deviation and the aforementioned electric current deviation $\Delta I_v$ are compared with each other at Step S302. When the electric current deviation $\Delta I_v$ is smaller than the minimum value of electric current deviation, the minimum value of electric current deviation is updated at Step S303 to the electric current deviation $\Delta I_v$. When an electric current deviation $\Delta I_v$ is larger than a minimum value of electric current deviation at Step S302, a minimum value of electric current deviation and the aforementioned electric current deviation $\Delta I_w$ are compared with each other at Step S304. When the electric current deviation $\Delta I_w$ is smaller than the minimum value of electric current deviation, the aforementioned minimum value of electric current deviation is updated at Step S305 to the electric current deviation $\Delta I_w$. When the electric current deviation $\Delta I_w$ is larger than a minimum value of electric current deviation at Step S304, no processing is carried out, so that the minimum value of electric current deviation remains as the aforementioned electric current deviation $\Delta I_u$.

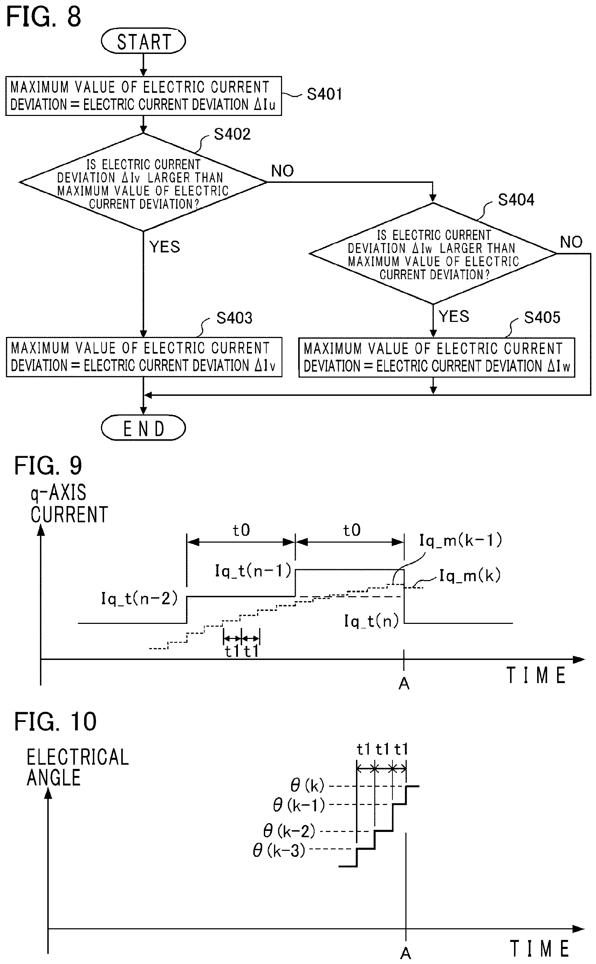

In addition, the detailed processing of maximum-value selection at Step S102 of FIG. 5 is exactly shown as in FIG. 8; and first, the aforementioned electric current deviation $\Delta I_u$ is substituted as a maximum value of electric current deviation at Step S401 in FIG. 8, and a maximum value of electric current deviation and the aforementioned electric current deviation $\Delta I_v$ are compared with each other at Step S402. When the electric current deviation $\Delta I_v$ is larger than the maximum value of electric current deviation, the maximum value of electric current deviation is updated at Step S403 to the electric current deviation $\Delta I_v$. When an electric current deviation $\Delta I_v$ is smaller than a maximum value of electric current deviation at Step S402, a maximum value of electric current deviation and the aforementioned electric current deviation $\Delta I_w$ are compared with each other at Step S404. When the electric current deviation $\Delta I_w$ is larger than the maximum value of electric current deviation, the maximum value of electric current deviation is updated at Step S405 to the electric current deviation $\Delta I_w$. When an electric current deviation $\Delta I_w$ is smaller than a maximum value of electric current deviation at Step S404, no processing is carried out, so that the maximum value of electric current deviation remains as the aforementioned electric current deviation $\Delta I_u$.

Next, at Step S103 shown in FIG. 5, the calculation of an electric-current deviation difference maximum-value $\Delta I_{Diff}$ is carried out. To be specific, a minimum value of electric current deviation acquired at Step S102 is subtracted from a maximum value of electric current deviation acquired at Step S102, so that an electric-current deviation difference maximum-value $\Delta I_{Diff}$ is calculated.

The explanation described above is based on the premise that, as shown in the schematic time chart of FIG. 3, detected electric-currents are to coincide with target electric-currents before time t0, at a time when a target q-axis current is updated by means of an electric current control for performing the feedback of a detected q-axis current $I_{q\_m}$ and that of a detected d-axis current $I_{d\_m}$ through the control calculation unit 4 with respect to a target q-axis current $I_{q\_t}$ and a target d-axis current $I_{d\_t}$ being updated on an every t0 basis.

However, as far as a feedback control is applied, it is unavoidable to cause the deviations between the target electric-currents and the detected electric-currents due to a sharp change of a target electric-current(s) and/or an influence of disturbance. FIG. 9 is a diagram schematically showing, by way of one example, an overview of a time chart at a time when such an exemplary case described above is caused. For example, it is shown that, at a time-point "A," a detected electric-current $I_{q\_m}$ does not coincide with a target q-axis current $I_{q\_t}(n - 1)$ before time t0, but does reach between a target q-axis current $I_{q\_t}(n - 2)$ further before the time t0 and the target q-axis current $I_{q\_t}(n - 1)$ before the time t0. Hereinbefore, the explanation has been made for the q-axis current; however, it can be similarly considered also for the d-axis current.

In addition, because applied voltages of phases each to the motor 10 change in accordance with the rotation at a time when a rotational speed of the motor 10 is fast, response delays are included in electric currents of the individual phases in the motor with respect to changes of the applied voltages of phases each due to the rotation of the motor 10. FIG. 10 is a diagram schematically showing, by way of one example, an overview of a time chart of electrical angle's changes at a time when a rotational speed of the motor 10 is fast. For example, at a time-point "A," an electrical angle is at a value of $\theta(k)$, and so, target phase currents are not coincident with detected phase currents by using the electrical angle thereat even when the target phase currents are calculated by performing two- to three-phase transformation on a target q-axis current $I_{q\_t}$ and on a target d-axis current $I_{d\_t}$. Therefore, it is appropriately understood that, for an electrical angle being used in the two-to three-phase transformation, parameter $\theta(k - 1)$ before time t1 and/or parameter $\theta(k - 2)$ further before the time t1 are used.

As described above, it is preferable to calculate targeted individual phase currents in accordance with the combinations of target electric-currents and electrical angles described as follows:

the combination of a target q-axis current $I_{q\_t}(n - 1)$ and a target d-axis current $I_{d\_t}(n - 1)$, and an electrical angle $\theta(k - 1)$;

the combination of a target q-axis current $I_{q\_t}(n - 2)$ and a target d-axis current $I_{d\_t}(n - 2)$, and the electrical angle $\theta(k - 1)$;

the combination of the target q-axis current $I_{q\_t}(n - 1)$ and the target d-axis current $I_{d\_t}(n - 1)$, and an electrical angle $\theta(k - 2)$; and

the combination of the target q-axis current $I_{q\_t}(n - 2)$ and the target d-axis current $I_{d\_t}(n - 2)$, and the electrical angle $\theta(k - 2)$.

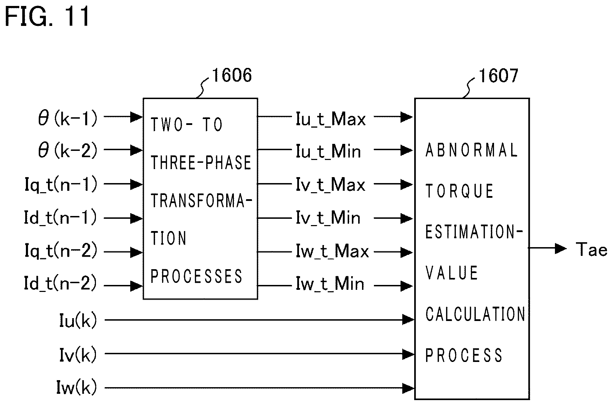

FIG. 11 is a diagram showing, by way of one example, another exemplary embodiment of the abnormal torque estimation unit 16 based on the aforementioned statements. In two- to three-phase transformation processes 1606, in FIG. 11, an electrical angle $\theta(k - 1)$, an electrical angle $\theta(k - 2)$, a target q-axis current $I_{q\_t}(n - 1)$, a target d-axis current $I_{d\_t}(n - 1)$, a target q-axis current $I_{q\_t}(n - 2)$ and a target d-axis current $I_{d\_t}(n - 2)$ are inputted. And then, the respective two- to three-phase transformation processes are carried out in accordance with the four combinations of the target electric-currents and the electrical angles described above, and respective maximum values and minimum values of individual phase target currents are calculated, so that a target phase-U current maximum-value $I_{u\_t\_Max}$, a target phase-U current minimum-value $I_{u\_t\_Min}$, a target phase-V current maximum-value $I_{v\_t\_Max}$, a target phase-V current minimum-value $I_{v\_t\_Min}$, a target phase-W current maximum-value $I_{w\_t\_Max}$ and a target phase-W current minimum-value $I_{w\_t\_Min}$ are outputted. In an abnormal torque estimation-value calculation process 1607, parameter "$\Delta I_{Diff}$" corresponding to an abnormal torque estimation value Tae is outputted, by undergoing through predetermined processing, in accordance with the target phase-U current maximum-value $I_{u\_t\_Max}$, the target phase-U current minimum-value $I_{u\_t\_Min}$, the target phase-V current maximum-value $I_{v\_t\_Max}$, the target phase-V current minimum-value $I_{v\_t\_Min}$, the target phase-W current maximum-value $I_{w\_t\_Max}$ and the target phase-W current minimum-value $I_{w\_t\_Min}$, and in accordance with a phase-U detected electric-current $I_u(k)$, a phase-V detected electric-current $I_v(k)$ and a phase-W detected electric-current $I_w(k)$.

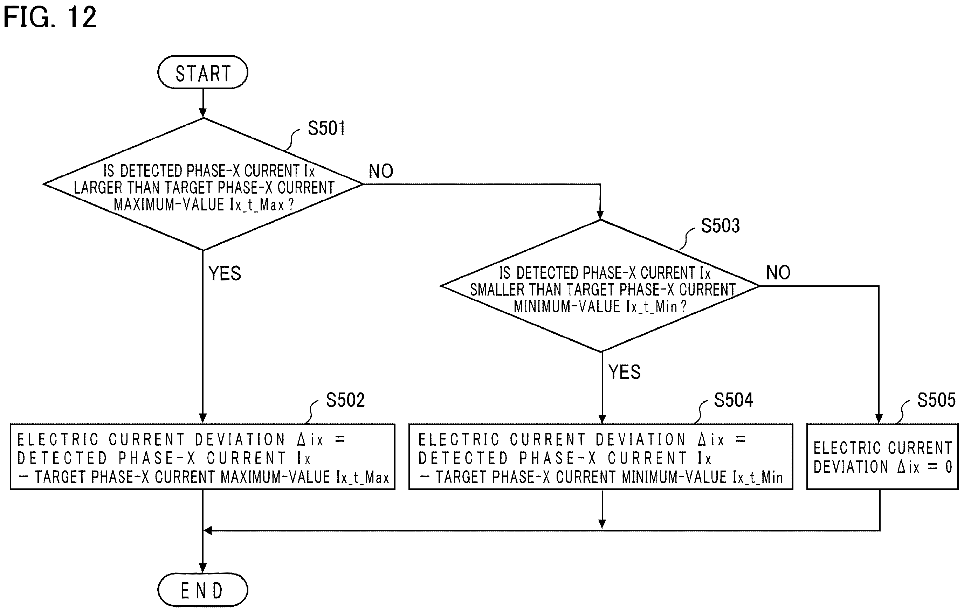

Next, the explanation will be made for the abnormal torque estimation-value calculation process 1607 of FIG. 11. Basic flows of processing contents in the abnormal torque estimation-value calculation process 1607 are exactly shown as in FIG. 5 and FIG. 6, similarly to the exemplary embodiment of FIG. 4; and first, the calculation of electric current deviations ($\Delta I_u$, $\Delta I_v$ and $\Delta I_w$) is carried out at Step S101. FIG. 12 shows the flows of detailed processing contents with respect to those of FIG. 6, which are common processing in conjunction with a phase-U, a phase-V and a phase-W each; and so, the processing is carried out in the order of the phase-U, the phase-V and the phase-W, so that an electric current deviation $\Delta I_u$, an electric current deviation $\Delta I_v$ and an electric current deviation $\Delta I_w$ are acquired. First, at Step S501, a detected phase-X current $I_x$ is compared with a target phase-X current maximum-value $I_{x\_t\_Max}$ being an output signal of the two- to three-phase transformation processes 1606. When a detected phase-X current $I_x$ is larger than a target phase-X current maximum-value $I_{x\_t\_Max}$, an electric current deviation $\Delta I_x$ takes on a value in which the target phase-X current maximum-value $I_{x\_t\_Max}$ is subtracted from the detected phase-X current $I_x$ at Step S502.

When a detected phase-X current $I_x$ is smaller than a target phase-X current maximum-value $I_{x\_t\_Max}$ at Step S501, the detected phase-X current $I_x$ is compared with a target phase-X current minimum-value $I_{x\_t\_Min}$ at Step S503, so that, when the detected phase-X current $I_x$ is smaller than the target phase-X current minimum-value $I_{x\_t\_Min}$, an electric current deviation $\Delta I_x$ takes on a value in which the target phase-X current minimum-value $I_{x\_t\_Min}$ is subtracted from the detected phase-X current $I_x$ at Step S504; and, when the detected phase-X current $I_x$ is larger than the target phase-X current minimum-value $I_{x\_t\_Min}$, the electric current deviation $\Delta I_x$ takes on "0" at Step S505. Note that, in the detected phase-X current $I_x$, the target phase-X current maximum-value $I_{x\_t\_Max}$, the target phase-X current minimum-value $I_{x\_t\_Min}$ and the electric current deviation $\Delta I_x$, parameter "X" designates any one of U, V and W, and parameter "x," any one of u, v and w, respectively.

Next, minimum-value and maximum-value selection of electric current deviations at Step S102 shown in FIG. 5 is carried out. The detailed processing of minimum-value selection at Step S102 of FIG. 5 is exactly shown as in FIG. 7, similarly to the exemplary embodiment of FIG. 3; and first, the electric current deviation $\Delta I_u$ is substituted into a minimum value of electric current deviation at Step S301 shown in FIG. 7, and a minimum value of electric current deviation and the aforementioned electric current deviation $\Delta I_v$ are compared with each other at Step S302. When the electric current deviation $\Delta I_v$ is smaller than the minimum value of electric current deviation, the minimum value of electric current deviation is updated at Step S303 to the aforementioned electric current deviation $\Delta I_v$. When an electric current deviation $\Delta I_v$ is larger than a minimum value of electric current deviation at Step S302, a minimum value of electric current deviation and the electric current deviation $\Delta I_w$ are compared with each other at Step S304. When the electric current deviation $\Delta I_w$ is smaller than the minimum value of electric current deviation, the aforementioned minimum value of electric current deviation is updated at Step S305 to the electric current deviation $\Delta I_w$. In addition, when the electric current deviation $\Delta I_w$ is larger than a minimum value of electric current deviation at Step S304, no processing is carried out, so that the minimum value of electric current deviation remains as the electric current deviation $\Delta I_u$.

The detailed processing of maximum-value selection at Step S102 of FIG. 5 is exactly shown as in FIG. 8, similarly to the exemplary embodiment of FIG. 3; and first, the electric current deviation $\Delta I_u$ is substituted into a maximum value of electric current deviation at Step S401 shown in FIG. 8, and a maximum value of electric current deviation and the electric current deviation $\Delta I_v$ are compared with each other at Step S402. When the electric current deviation $\Delta I_v$ is larger than the maximum value of electric current deviation, the maximum value of electric current deviation is updated at Step S403 to the aforementioned electric current deviation $\Delta I_v$. When an electric current deviation $\Delta I_v$ is smaller than a maximum value of electric current deviation at Step S402, a maximum value of electric current deviation and the electric current deviation $\Delta I_w$ are compared with each other at Step S404. When the electric current deviation $\Delta I_w$ is larger than the maximum value of electric current deviation, the maximum value of electric current deviation is updated at Step S405 to the electric current deviation $\Delta I_w$. In addition, when an electric current deviation $\Delta I_w$ is smaller than a maximum value of electric current deviation at Step S404, no processing is carried out, so that the maximum value of electric current deviation remains as the aforementioned electric current deviation $\Delta I_u$.

Next, the calculation of an electric-current deviation difference maximum-value $\Delta I_{Diff}$ at Step S103 in FIG. 5 is carried out. To be specific, the minimum value of electric current deviation acquired at Step S102 is subtracted from the maximum value of electric current deviation similarly to the exemplary embodiment of FIG. 3, so that an electric-current deviation difference maximum-value $\Delta I_{Diff}$ is calculated.

As described above, it can be known that an abnormal torque estimation value Tae being an output signal of the abnormal torque estimation unit 16 in FIG. 1, namely, the electric-current deviation difference maximum-value $\Delta I_{Diff}$ is calculated.

Next, the explanation will be made for the processing of the cutoff management unit 17 in FIG. 1. The cutoff management unit 17 is provided with the function to perform determination whether the motor 10 is to be brought about in a motor drive-operation state or brought about in a motor drive-operation halt state, by using a value of electric-current deviation difference maximum-value $\Delta I_{Diff}$ being an abnormal torque value estimated by the abnormal torque estimation unit 16, a battery voltage Vba detected by the battery voltage detection unit 20, and a motor revolution number calculated from an electrical angle $\theta$ detected by the electrical angle calculation unit 14. And, only when determination of a drive-operation halt state is performed, the cutoff management unit is provided with the function to transmit a forced PWM-signal turn-off instruction INoff toward the control calculation unit 4, and also to transmit an FET-gate-driving cutoff instruction INcg toward the FET-gate-driving cutoff unit 5, and a battery voltage cutoff instruction INcv toward the battery voltage cutoff unit 19.

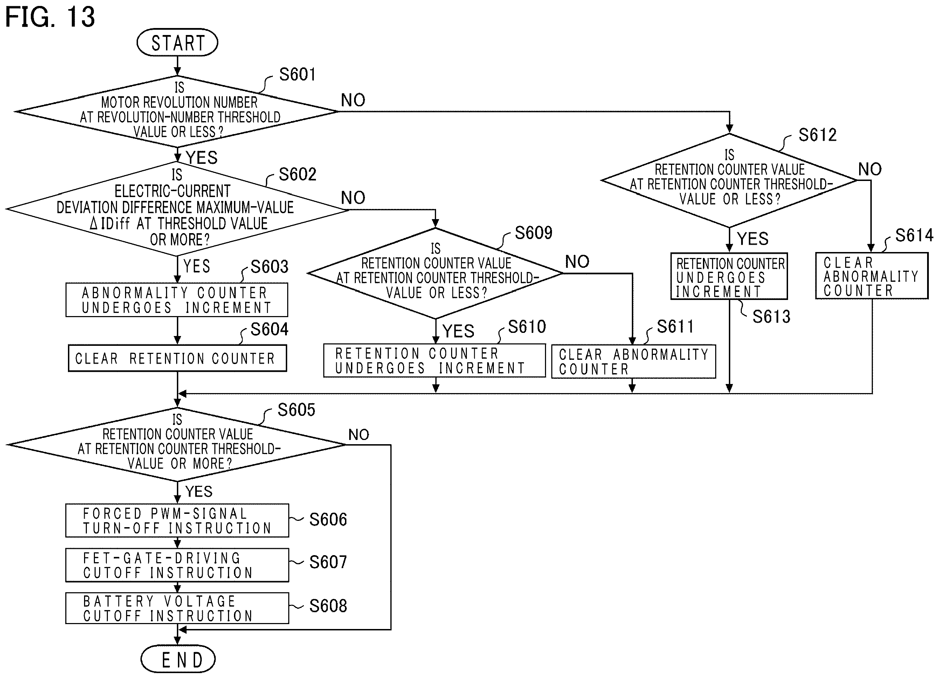

In addition, FIG. 13 shows processing flows of the cutoff management unit 17; and first, at Step S601, determination is performed whether or not a motor revolution number calculated from an electrical angle $\theta$ obtained from the electrical angle calculation unit 14 is at a revolution-number threshold value being set in advance or less.

In a surface permanent magnet type motor, its induced voltages proportional to the number of revolutions of the motor, i.e. a motor revolution number, are generated. Electric currents capable of being flowed through the motor 10 are limited by voltage differences between the induced voltages in accordance with the rotation of the motor and a battery voltage. Due to the phenomenon, line currents flowing through the motor are reduced with respect to instruction electric-currents calculated from detection torque detected by the torque detector 2, whereby it is feared that individual phase detected electric-currents $I_u$, $I_v$ and $I_w$ result in having electric current deviations with respect to targeted individual phase currents $I_{u\_t}$, $I_{v\_t}$ and $I_{w\_t}$ being expected values, and that a value of electric-current deviation difference maximum-value $\Delta I_{Diff}$ being a calculation result of the abnormal torque estimation unit 16 takes on a threshold value being set or more, so that erroneous determination may be induced. For this reason, it can be known that, as a monitoring condition, Step S601 being the monitoring condition of a motor revolution number is set in the processing flows of FIG. 13. When a motor revolution number exceeds a threshold value of the number of revolutions, i.e. a revolution-number threshold value, being set in advance, a drive operation of the motor 10 is not halted.

It is so arranged that, by obeying a battery voltage Vba detected by the battery voltage detection unit 20, the revolution-number threshold value being the monitoring condition of the motor revolution number undergoes a variable operation; and so, for example, the revolution-number threshold value is determined in such a manner that the number of revolutions to reach at a voltage saturation is prepared on a battery voltage basis as a map in advance, and a battery voltage Vba detected in a certain constant period is checked against the map. In addition, after having taken an operationally capable voltage(s) of system into consideration, it may be adopted that, without carrying out the variable operation of a revolution-number threshold value in accordance with a battery voltage Vba, a revolution-number fixed-value which does not induce erroneous determination is used for the revolution-number threshold value.

When a motor revolution number is at a revolution-number threshold value or less at Step S601 of FIG. 13, an electric-current deviation difference maximum-value $\Delta I_{Diff}$ is compared with a threshold value at Step S602. The threshold value is given by the right-hand side of Expression (28) described above, which takes on a value calculated, by using a steering torque change-quantity $\Delta_{Th}$ being set in advance corresponding to an adapted system, and by obeying a torque constant (torque/electric-current conversion coefficient) $K_m$ [Nm/A], a motor reduction ratio $G_{gear}$, an output gain G of the motor 10 with respect to detection torque, and a safety requirements and/or a safety target(s).

When an electric-current deviation difference maximum-value $\Delta I_{Diff}$ is at a threshold value or more at Step S602, an abnormality counter undergoes increment at Step S603, and also a retention counter is cleared at Step S604.

When the electric-current deviation difference maximum-value $\Delta I_{Diff}$ is less than the threshold value at Step S602, verification is performed at Step S609 whether or not the retention counter is at a retention counter threshold-value or less. It is suitable that the abnormality counter threshold-value and the retention counter threshold-value are set at appropriate values in accordance with an applied system.

When the verification result at Step S609 is "YES" (a retention counter value is at a retention counter threshold-value or less), the retention counter undergoes increment at Step S610; and, when the result at Step S609 is "NO" (a retention counter value exceeds a retention counter threshold-value), the abnormality counter is cleared at Step S611.

When a motor revolution number exceeds a revolution-number threshold value at Step S601, verification is performed at Step S612 whether or not a retention counter value is at a retention counter threshold-value or less; and, when the verification result is "YES" (an retention counter value is at a retention counter threshold-value or less), the retention counter undergoes increment at Step S613.

When the result at Step S612 is "NO" (a retention counter value exceeds a retention counter threshold-value), the abnormality counter is cleared at Step S614.

Next, at Step S605, verification is performed whether or not an abnormality counter value is at an abnormality counter threshold-value or more; and, when the verification result is "YES" (an abnormality counter value is at an abnormality counter threshold-value or more), there results in bringing about the transition to a motor drive-operation halt state. And so, a forced PWM-signal turn-off instruction INoff is transmitted toward the control calculation unit 4 at Step S606; and also, at Step S607, an FET-gate-driving cutoff instruction INcg is transmitted to the FET-gate-driving cutoff unit 5, and a motor current cutoff instruction INci is transmitted to the motor current cutoff unit 9. In addition, with respect to the battery voltage cutoff unit 19, a battery voltage cutoff instruction INcv is transmitted (Step S608).

According to the processing at Step S605, Step S606 and Step S607, instruction electric-currents into the motor 10 are interrupted, and thus, the motor 10 becomes in a motor drive-operation halt state, and an assist halt state is brought about in an electric power steering device.

When the verification result at Step S605 is "NO" (an abnormality counter value is less than an abnormality count threshold-value), determination is performed so that abnormal torque is not caused, so that the motor 10 does not become in a motor drive-operation halt state, and a present state is maintained.

Embodiment 2.

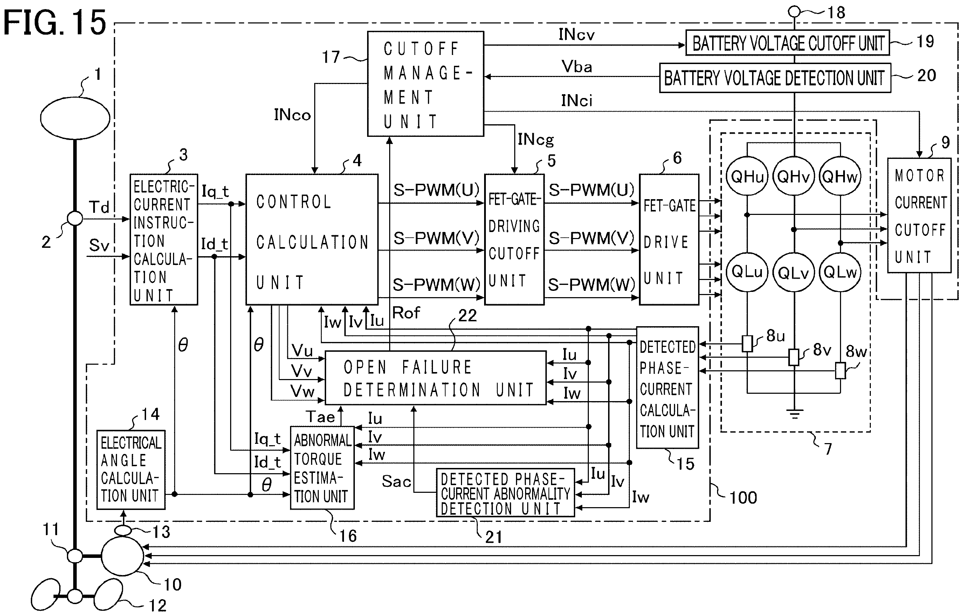

FIG. 15 is an overall diagram illustrating, by way of one exemplary embodiment, a configuration of an electric power steering device according to Embodiment 2; and, to the overall diagram illustrating, by way of the one exemplary embodiment, the configuration of the electric power steering device of FIG. 1 according to Embodiment 1, a detected phase-current abnormality detection unit 21 and an open failure determination unit 22 are added, and processing contents of the cutoff management unit 17 are modified, whereby the electric power steering device according to Embodiment 2 is provided with the function to perform open-failure determination on an FET(s) (electrolysis-effect transistor) being a drive device of the motor driving device 7 and disconnection failure determination on a motor line (s) of the motor 10. And, at a time when an open failure (s) of an FET (s) constituting of the drive device of the motor driving device 7 is detected, or at a time when a disconnection failure (s) of a motor line (s) of the motor 10 is detected, the electric power steering device is provided with the function in which a motor drive operation is continued by other phases other than a failure phase when the failure phase of a liberation failure(s) is in only one phase, whereas the motor drive operation is halted in such a case other than the open failure of an FET (s) constituting of the drive element (s) of the motor driving device 7 or a case being a failure other than a disconnection failure of a motor line of the motor 10, or in such a case that failure phases are in two phases or more. Note that, in the explanation hereinafter, there may be a case in which the explanation will be made referring these FETs as to "drive elements."

Open failure detection of an FET (s) in the motor driving device 7, or disconnection detection on a motor line of the motor 10 is carried out by the open failure determination unit 22, when an abnormal torque estimation value Tae being an output of the abnormal torque estimation unit 16 is at an abnormal value, and also when a signal Sac indicating a detected electric-currents' abnormal state is outputted from the detected phase-current abnormality detection unit 21.

Here, the explanation will be made in relation to the behavior at a time of an open failure of a phase-U FET(s) in the motor driving device 7. First, the explanation will be made for the behavior of each one of phase currents immediately after an open failure of a phase-U FET (s) is caused by presuming that the motor 10 is a simple resistor model. The behavior indicates such a behavior before three-phase applied voltages are to change by means of an electric current feedback control by the control calculation unit 4. Note that, the explanation is made by way of example for the occurrence of an open failure in the phase-U; however, also in a case of the occurrences of open failures each in the phase-V and phase-W, the contents of change result in the same while the subject-matter phase is only altered.

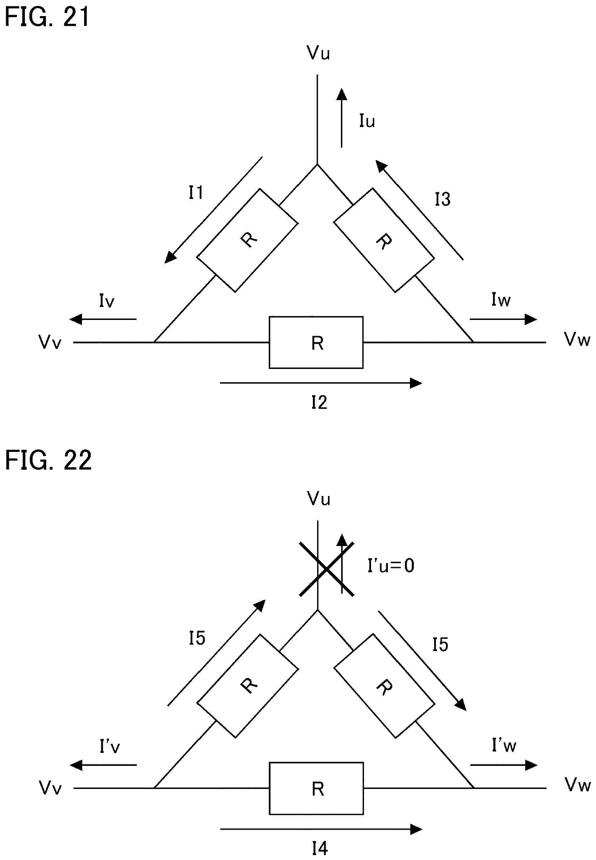

FIG. 21 is a resistor model at a normal time, and so, by using phase voltages $V_u$, $V_v$ and $V_w$, and resistance R, each one of phase currents $I_u$, $I_v$ and $I_w$ at the normal time can be given by Expressions (31), (32) and (33) described below, respectively.
[Expression Figure-31]

$$I_u = \frac{-2V_u + V_v + V_w}{R} \qquad \cdots (31)$$

[Expression Figure-32]

$$I_v = \frac{V_u - 2V_v + V_w}{R} \qquad \cdots (32)$$

[Expression Figure-33]

$$I_w = \frac{V_u + V_v - 2V_w}{R} \qquad \cdots (33)$$

In addition, FIG. 22 is a simple resistor model of the motor 10 at a time when an open failure of a phase-U FET(s) is caused, and so, when each one of phase currents at this time of the open failure is defined as $I'_u$, $I'_v$ and $I'_w$, these can be given by Expressions (34), (35) and (36) described below, respectively.
[Expression Figure-34]

$$I'_u = 0 \qquad \cdots (34)$$

[Expression Figure-35]

$$I'_v = -\frac{3V_v - 3V_w}{2R} \qquad \cdots (35)$$

[Expression Figure-36]

$$I'_w = \frac{3V_v - 3V_w}{2R} \qquad \cdots (36)$$

In accordance with Expressions (31) through (36), a phase-V current $I'_v$ at the time when the open failure of a phase-U FET(s) is caused and a phase-W current $I'_w$ thereat are given, by using each one of phase currents $I_u$, $I_v$ and $I_w$ at a normal time, as Expressions (37) and (38) described below, respectively.
[Expression Figure-37]

$$I'_v = I_v + \frac{1}{2}I_u \qquad \cdots (37)$$

[Expression Figure-38]

$$I'_w = I_w + \frac{1}{2} I_u \qquad \cdots \ (38)$$

In accordance with Expressions (37) and (38), phase currents immediately after an open failure is caused in the single phase FET(s) result in flowing in such a manner that an electric current having been flowed through a phase in which the open failure is caused is equally distributed into other phases; and, in addition, electric currents of phases in which the open failure is not caused become such electric currents whose absolute values are equal, but whose signs differ (reverse directions) with each other.

Next, the explanation will be hereinafter made for the behavior of the abnormal torque estimation unit 16 at a time of an open failure on the phase-U FET (s) . When individual phase target currents are defined as $I_{u\_t}$, $I_{v\_t}$ and $I_{w\_t}$ for each phase, and at a time under a state in which each one of phase currents is accurately controlled on the individual phase target currents, each one of phase currents $I'_u$, $I'_v$ and $I'_w$ at the time of causing an open failure on a phase-U FET (s) can be given by the aforementioned Expression (34), and by the following Expression (39) and Expression (40), respectively.

[Expression Figure-39]

$$I'_v = I_{v\_t} + \frac{1}{2} I_{u\_t} \qquad \cdots \ (39)$$

[Expression Figure-40]

$$I'_w = I_{w\_t} + \frac{1}{2} I_{u\_t} \qquad \cdots \ (40)$$

Here, with respect to the expressions of the aforementioned Expression (2) through Expression (4), a phase-U current $I'_u$, and the aforementioned Expression (39) and Expression (40) are converted, and then are expressed according to electric current deviations $\Delta I_u$, $\Delta I_v$ and $\Delta I_w$, so that the following Expression (41) through Expression (43) can be given.

[Expression Figure-41]

$$\Delta I_u = -I_{u\_t} \qquad \cdots \ (41)$$

[Expression Figure-42]

$$\Delta I_v = \frac{1}{2} I_{u\_t} \qquad \cdots \ (42)$$

[Expression Figure-43]

$$\Delta I_w = \frac{1}{2} I_{u\_t} \qquad \cdots \ (43)$$

In accordance with Expressions (41) through (43) described above, it is so given that "an electric-current deviation minimum-value $\Delta I_{min} = \Delta I_u = -I_{u\_t}$," and given that "an electric-current deviation difference maximum-value $\Delta I_{max} = \Delta I_v = \Delta I_w = (1/2) I_{u\_t}$," and thus, an electric-current deviation difference maximum-value $\Delta I_{Diff}$ can be expressed by Expression (44) described below.

[Expression Figure-44]

$$\Delta I_{Diff} = \frac{1}{2} I_{u\_t} - \left(-I_{u\_t}\right) = \frac{3}{2} I_{u\_t} \quad \cdots \quad (44)$$

An electric-current deviation difference maximum-value $\Delta I_{Diff}$ at a time of causing a phase-U open failure, namely, an abnormal torque estimation value can be expressed by the aforementioned Expression (44), and, at the time of causing the phase-U open failure, the abnormal torque estimation value changes because a target phase-U current $I_{u\_t}$ becomes the factor. When a determination threshold value of abnormal torque occurrence being set in advance is defined as "$\Delta I_{Diff\_th}$," a target phase-U current $I_{u\_t}$ in which determination is performed as abnormal torque occurrence at the time of causing the open failure of a phase-U FET(s) can be given by the following Expression (45); and thus, when Expression (45) is satisfied, it is possible to perform the determination in accordance with an abnormal torque estimation value Tae which is abnormal.

[Expression Figure-45]

$$I_{u\_t} \geq \frac{2}{3} I_{Diff\_th} \quad \cdots \quad (45)$$

Next, the explanation will be made for the behavior of each phase current in the abnormal torque estimation unit 16 at a time when a phase-U open failure is caused, and for the open-failure determination processing. When the phase-U open failure is caused, and also when the condition of Expression (45) is satisfied, an electrical angle is defined as "$\theta$," and the amplitude of target electric-current is defined as "$I_{pk}$," so that individual phase target currents $I_{u\_t}$, $I_{v\_t}$ and $I_{w\_t}$ can be given by Expressions (46) through (48) as described below, respectively.

[Expression Figure-46]

$$I_{u\_t} = I_{pk} \sin(\theta) \quad \cdots \quad (46)$$

[Expression Figure-47]

$$I_{v\_t} = I_{pk} \sin\left(\theta - \frac{2}{3}\pi\right) \quad \cdots \quad (47)$$

[Expression Figure-48]

$$I_{w\_t} = I_{pk} \sin\left(\theta + \frac{2}{3}\pi\right) \quad \cdots \quad (48)$$

According to Expression (45) and Expression (46), the amplitude of target electric-current, $I_{pk}$, at this time of occasion can be given by Expression (49).

[Expression Figure-49]

$$I_{pk} = \frac{2 I_{Diff\_th}}{3 \sin\theta} \quad \cdots \quad (49)$$

According to Expression (49), and to Expressions (46) through (48), individual phase target currents $I_{u\_t}$, $I_{v\_t}$ and $I_{w\_t}$ can be given by Expressions (50) through (52) as described below, respectively.

[Expression Figure-50]

$$I_{u\_t} = \frac{2}{3} I_{Diff\_th} \qquad \cdots (50)$$

[Expression Figure-51]

$$I_{v\_t} = \frac{2I_{Diff\_th}}{3\sin\theta} \sin(\theta - \frac{2}{3}\pi) \qquad \cdots (51)$$

[Expression Figure-52]

$$I_{w\_t} = \frac{2I_{Diff\_th}}{3\sin\theta} \sin(\theta + \frac{2}{3}\pi) \qquad \cdots (52)$$

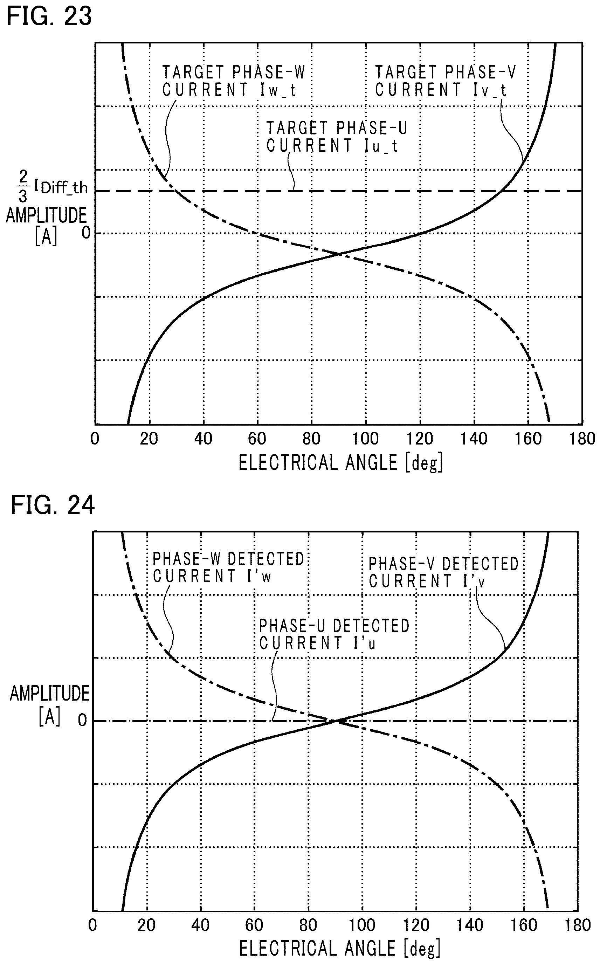

A schematic diagram of individual phase target currents at that time of occasion is shown by FIG. 23; and, in addition, a phase-U current I'$_u$ flowing through the motor 10 is at "0," so that, by using Expression (39) and Expression (40), and using Expressions (50) through (52) described above, a phase-V current I'$_v$ and a phase-W current I'$_w$ can be given by Expression (53) and Expression (54), respectively.
[Expression Figure-53]

$$I'_v = \frac{2I_{Diff\_th}}{3\sin\theta} \sin\left(\theta - \frac{2}{3}\pi\right) + \frac{1}{3} I_{Diff\_th} \qquad \cdots (53)$$

[Expression Figure-54]

$$I'_w = \frac{2I_{Diff\_th}}{3\sin\theta} \sin\left(\theta + \frac{2}{3}\pi\right) + \frac{1}{3} I_{Diff\_th} \qquad \cdots (54)$$

FIG. 24 is a schematic diagram of each phase current flowing through the each phase of the motor at that time of occasion; and, with respect to "the phase-U current = 0," a phase-V current takes on a value given by Expression (53), and a phase-W current, a value given by Expression (54), respectively. At a time when an electrical angle is detected at 90 deg., at 270 deg. (not shown in the figures, which is applicable hereinafter in a similar fashion) or at these surroundings, it is so given that "a phase-U current = a phase-V current = a phase-W current = vicinity to 0 A," and so, at that time, distinguishable determination of an open failure phase (s) becomes difficult in accordance with varying magnitude relationships in absolute values of the detected phase currents . For this reason, the determination is performed by using the varying magnitude relationships in absolute values of applied voltages of phases each. At a time when an electrical angle is detected at 90 deg., at 270 deg. or at these surroundings, an absolute value of phase-U applied voltage, |V$_u$|, takes on a larger value than an absolute value of phase-V applied voltage, |V$_v$| , and also than an absolute value of phase-V applied voltage, |V$_w$| ; and thus, if the condition satisfies that a phase-U current is in vicinity to 0 A, and if the condition satisfies the following theoretical Expression (55) using absolute values of applied voltages of the phases each, it is possible to perform determination of an open failure (s) of a phase-U FET (s). Note that, it is so arranged that the determination whether or not a phase-U current is in vicinity to 0 A is performed in such a manner that the phase-U current is within a predetermined threshold value being set in advance in accordance with an applied system.
[Expression Figure-55]

$$\left( |I_u| < \text{Predetermined Threshold Value} \right) \wedge \left( (|V_u| > |V_v|) \wedge (|V_u| > |V_w|) \right)$$

$$\cdots (55)$$

At a time other than an electrical angle at 90 deg., at 270 deg. or at these surroundings, a phase-V current and a phase-W current do not take on those in vicinity to 0 A even at a time of an open failure(s) of a phase-U FET(s), it is possible to perform determination of an open failure(s) of a phase-U FET(s) from varying magnitude relationships of individual phase currents, if the conditions satisfies the following theoretical Expression (56). Note that, it is so arranged that the determination whether or not a phase-V current and a phase-W current are not in vicinities to 0 A is performed in such a manner that they are at predetermined threshold values being set in advance or more in accordance with an applied system.
[Expression Figure-56]

$$\left( |I_u| < \text{Predetermined Threshold Value} \right) \wedge \left( \left( |I_v| > \text{Predetermined Threshold Value} \right) \wedge \left( |I_w| > \text{Predetermined Threshold Value} \right) \right)$$

$$\cdots (56)$$

By combining a theoretical expression of Expression (55) and that of Expression (56), it becomes possible to perform open-failure determination at all of electrical angles at a time of an open failure (s) of a phase-U FET(s). The combined theoretical expression is Expression (57) described below.
[Expression Figure-57]

$$\left( |I_u| < \text{Predetermined Threshold Value} \right) \wedge \left( \left( (|V_u| > |V_v|) \wedge (|V_u| > |V_w|) \right) \vee \left( \left( |I_v| > \text{Predetermined Threshold Value} \right) \wedge \left( |I_w| > \text{Predetermined Threshold Value} \right) \right) \right)$$

$$\cdots (57)$$

Moreover, a total sum-value of individual phase currents detected and calculated by the detected phase-current calculation unit 15 takes theoretically on "0" at a time of an ordinary motor drive operation. However, a total sum-value of individual phase currents does not take on "0," at a time of abnormality occurrence of abnormality in the detected phase-current calculation unit 15, and at a time of abnormality occurrence of a failure(s) of the shunt resistors 8u, 8v and 8w, and a short-circuit failure or the like of a drive element (s) in the motor driving device 7.

In a case of a single phase open failure of a drive element(s) in the motor driving device 7, an electric current having been flowed through a phase in which the open failure is caused results in being equally distributed into other phases in accordance with Expression (37) and Expression (38), and thus, a total sum-value of individual phase currents takes on "0." For this reason, the condition of a total sum-value of individual phase currents is added to Expression (57), whereby it becomes possible to separate a single phase open failure of a drive element(s) in the motor driving device 7, from abnormality in the detected phase-current calculation unit 15, and from a failure (s) of the shunt resistors 8u, 8v and 8w, and also from a short-circuit failure of a drive element (s) in the motor driving device 7. It is so arranged that, as for the determination whether a total sum-value of individual phase currents takes on "0" or not, the total sum-value is at a predetermined threshold value being set in advance or more in accordance with an applied system; and so, the determination condition is based on Expression (58) described below.
[Expression Figure-58]

$$\left( I_u + I_v + I_w \right) < \text{Predetermined Threshold Value} \qquad \cdots (58)$$

According to the manner described above, it becomes possible to distinguish an open failure phase(s) at a time of causing abnormal torque in the abnormal torque estimation unit 16, when a logical AND operation of Expression (57) and Expression (58) is satisfied. By using these described above, the explanation will be made for the processing contents of the detected phase-current abnormality detection unit 21 and for those of the open failure determination unit 22.

It should be noted that, the example has been shown at a time of an open failure (s) of a phase-U FET(s); however, at a time of an open failure (s) of a phase-V FET (s), a failure phase determination condition is a logical AND operation of the following Expression (59) and the aforementioned Expression (58), and, at a time of an open failure (s) of a phase-W FET (s), a failure phase determination condition takes on a logical AND operation of the following Expression (60) and the aforementioned Expression (58).

[Expression Figure-59]

$$\left(|I_v| < \substack{\text{Predetermined} \\ \text{Threshold Value}}\right) \wedge \left(\left((|V_v| > |V_u|) \wedge (|V_v| > |V_w|)\right) \vee \left((|I_u| > \substack{\text{Predetermined} \\ \text{Threshold Value}}\right) \wedge \left(|I_w| > \substack{\text{Predetermined} \\ \text{Threshold Value}}\right)\right)\right) \quad \cdots (59)$$

[Expression Figure-60]

$$\left(|I_w| < \substack{\text{Predetermined} \\ \text{Threshold Value}}\right) \wedge \left(\left((|V_w| > |V_u|) \wedge (|V_w| > |V_v|)\right) \vee \left((|I_u| > \substack{\text{Predetermined} \\ \text{Threshold Value}}\right) \wedge \left(|I_v| > \substack{\text{Predetermined} \\ \text{Threshold Value}}\right)\right)\right) \quad \cdots (60)$$

The detected phase-current abnormality detection unit 21 of FIG. 15 is provided with the function by which determination is performed whether or not a phase-U detected electric-current $I_u$, a phase-V detected electric-current $I_v$ and a phase-W detected electric-current $I_w$ each being outputs of the detected phase-current calculation unit 15 of FIG. 15 are normal, so that the determination of Expression (58) is performed. As for the determination, an absolute value of total sum of a phase-U detected electric-current $I_u$, a phase-V detected electric-current $I_v$ and a phase-W detected electric-current $I_w$ is used. And so, when the absolute value of the total sum is less than a predetermined threshold value, the determination is performed so as to be "normal," and, when the absolute value is at the threshold value or more, the determination is performed so as to be "abnormal," whereby a detected electric-currents' abnormal state being a determination result is outputted. Note that, an appropriate value is set for the predetermined threshold value in accordance with an adapted system.

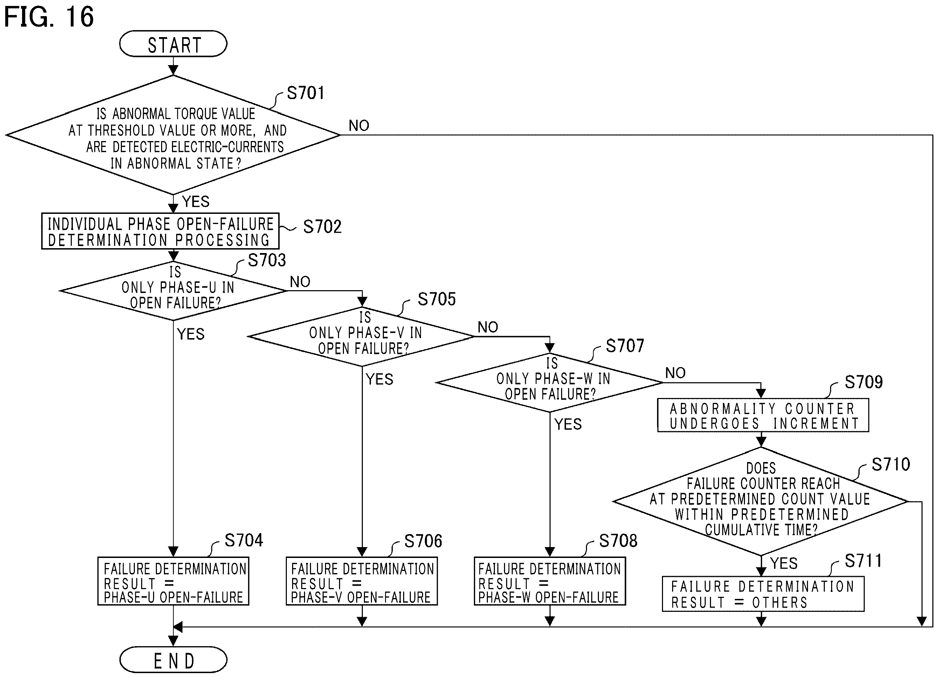

The explanation will be made referring to FIG. 16 for processing contents in the open failure determination unit 22. In addition, the processing of the open failure determination unit 22 being the flows of FIG. 16 is periodic processing carried out in a predetermined period, so that it is presumed that the processing is carried out in an appropriate period in accordance with an adapted system.

At Step S701 shown in FIG. 16, determination is performed whether or not an abnormal torque estimation value Tae being an output calculated by the abnormal torque estimation unit 16, namely, an electric-current deviation difference maximum-value $\Delta I_{Diff}$ is at a predetermined threshold value defined in advance or more, and also whether or not detected electric-currents are in an abnormal state (whether or not a signal Sac indicating a detected electric-current's abnormal state is outputted from the detected phase-current abnormality detection unit 21). Individual phase open-failure determination processing at Step S702 is carried out, when an electric-current deviation difference maximum-value $\Delta I_{Diff}$ is at a predetermined threshold value or more, and a signal Sac indicating that a detected electric-current' s state is abnormal is outputted, and also when a motor revolution number is at a predetermined revolution-number threshold value or less. Note that, processing contents in the abnormal torque estimation unit 16 are similar to those of Embodiment 1, and thus their explanation will be omitted. The threshold value compared with an electric-current deviation difference maximum-value $\Delta I_{Diff}$ is given by the right-hand side of Expression (28) described above, which takes on a value being calculated, by using a steering torque change-quantity $\Delta Th$ being set in advance corresponding to an adapted system, and calculated by obeying a torque constant (torque/electric-current conversion coefficient) $K_m$ [Nm/A], a motor reduction ratio $G_{gear}$, an output gain G of the motor 10 with respect to detection torque, and a safety requirements and/or a safety target(s).

Determination whether or not detected electric-currents at Step S701 are in an abnormal state is based on the determination condition of Expression (58). The determination is in use for separating a single phase open failure of a drive element (s) in the motor driving device 7, from abnormality in the detected phase-current calculation unit 15, and from a failure (s) of the shunt resistors 8u, 8v and 8w, and also from a short-circuit failure of a drive element(s) in the motor driving device 7.

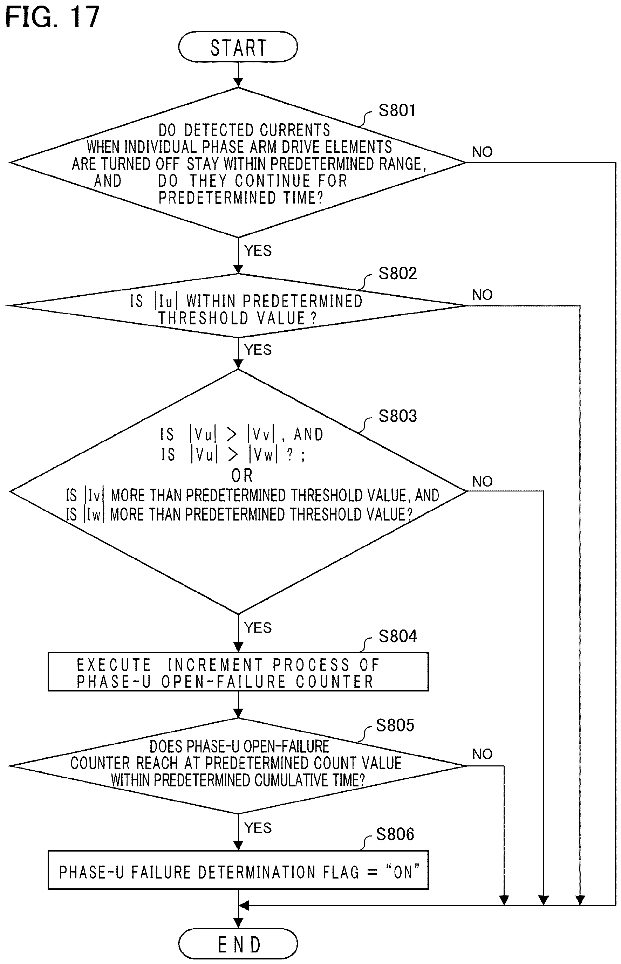

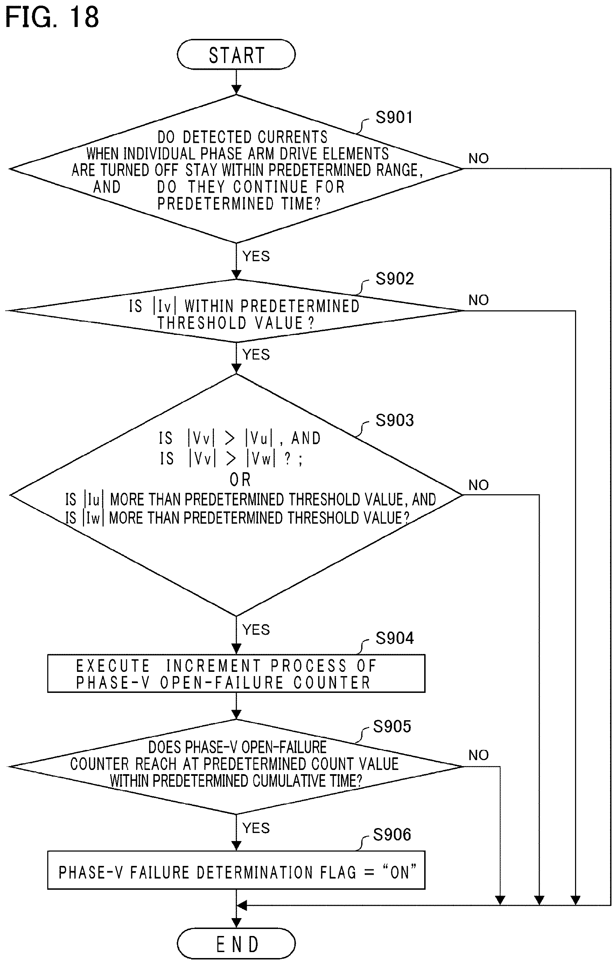

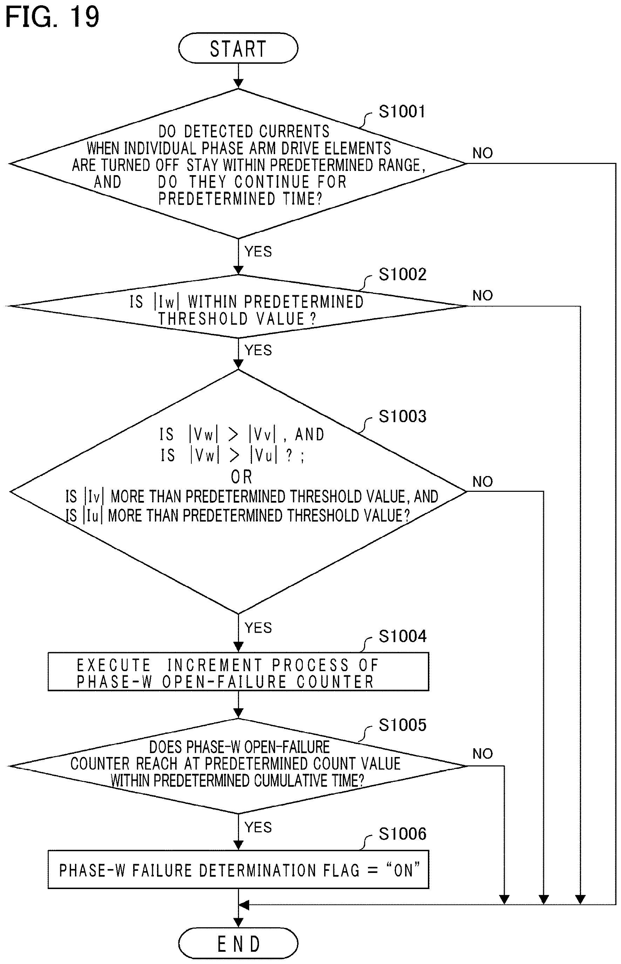

When determination at Step S701 is "YES," individual phase open-failure determination processing at Step S702 is executed. In the individual phase open-failure determination processing at Step S702, phase-U open-failure determination processing of FIG. 17, phase-V open-failure determination processing of FIG. 18 and phase-W open-failure determination processing of FIG. 19 are executed. These pieces of processing are of periodic processing carried out in an identical period, and are also operated in parallel with each other. Note that, it may also be so arranged to take a form in which the phase-U open-failure determination processing, the phase-V open-failure determination processing and the phase-W open-failure determination processing are carried out in their order in a predetermined order. That is to say, the open-failure determination processing is executed for a phase having been selected. In addition, when the determination at Step S701 is "NO," the processing in FIG. 16 is ended.

First, the explanation will be made in relation to the phase-U open-failure determination processing of FIG. 17. At Step S801, verification is performed whether or not a phase-U detected phase current $I_{U\_OFF}$, a phase-V detected phase current $I_{V\_OFF}$ and a phase-W detected phase current $I_{W\_OFF}$ stay within a predetermined normal range defined in advance, where the phase-U detected phase current $I_{U\_OFF}$, the phase-V detected phase current $I_{V\_OFF}$ and the phase-W detected phase current $I_{W\_OFF}$ are detected at those times when gate drive signals with respect to the QLu, QLv and QLw being the lower arm drive elements are in turn-off instructions among gate drive signals being output signals from the FET-gate drive unit 6. When a state continues for a predetermined time in which a phase-U detected phase current $I_{U\_OFF}$, a phase-V detected phase current $I_{V\_OFF}$ and a phase-W detected phase current $I_{W\_OFF}$ stay within a predetermined normal range, a determination result is defined as "YES," and next Step S802 is executed. When a state does not continue for the predetermined time defined in advance in which a phase-U detected phase current $I_{U\_OFF}$, a phase-V detected phase current $I_{V\_OFF}$ and a phase-W detected phase current $I_{W\_OFF}$ stay within the predetermined normal range, a determination result is defined as "NO," and the phase-U open-failure determination processing of FIG. 17 is ended.

The determination processing at Step S801 is used for determining whether or not a short-circuit failure (s) of a lower arm drive element(s) in the motor driving device 7 is caused. In the exemplary embodiment, lower arm shunts are used in which the shunt resistors 8u, 8v and 8w are connected between lower arm drive elements in each phase and the ground, so that, at normal times, detected phase currents being detected and calculated by the detected phase-current calculation unit 15 take on their values in vicinity to 0 A at those times when the lower arm drive elements are in their turn-off states . However, when a lower arm drive element(s) undergoes a short-circuit failure(s), the lower arm drive element(s) takes on in an turn-on state at all times, so that a voltage (power source voltage) of the battery 18 being applied to the motor driving device 7 takes on a state in which the ground is short-circuited to, at a time when an upper arm drive element (s) turns on. Because of this, a detected phase current does not take on the vicinity of 0 A, whereas a short-circuit current (s) results in flowing through. In order to perform the determination described above, individual phase currents are used at the time when each of the lower arm drive elements is turned off, instead of using a detected phase current (s) at a time when each of the lower arm drive elements is turned on, where each of them is utilized at the time of the ordinary motor control.

Next, at Step S802, verification is performed whether or not parameter $|I_U|$ being an absolute value of a phase-U detected phase current $I_U$ is within a predetermined threshold value. As described in Expression (34), a phase-U detected phase current $I_U$ takes on its value in vicinity to 0 A, when a phase-U drive element(s) causes an open failure. Note that, the predetermined threshold value in use for the determination on the vicinity of 0 A or not is set at an appropriately predetermined threshold value in accordance with an adapted system. When an absolute value $|I_U|$ of a phase-U detected phase current $I_U$ is within a predetermined threshold value, a determination result is defined as "YES," and next Step S803 is executed. When an absolute value $|I_U|$ of the phase-U detected phase current $I_U$ is at the predetermined threshold value or more, a determination result is defined as "NO," and the phase-U open-failure determination processing of FIG. 17 is ended.

Next, at Step S803 which is a process-step for determining whether or not the phase-U is in an open failure, and so threat, the determination processing of Expression (57) described above is executed by using an absolute value $|V_U|$ of a phase-U target voltage $V_U$ corresponding to a voltage instruction, an absolute value $|V_V|$ of a phase-V target voltage $V_V$ corresponding thereto and an absolute value $|V_W|$ of a phase-W target voltage $V_W$ corresponding thereto, and using a phase-V detected electric-current $|I_V|$ and a phase-W detected electric-current $|I_W|$. When an absolute value $|V_U|$ of a phase-U target voltage $V_U$ is more than an absolute value $|V_V|$ of a phase-V target voltage $V_V$ and also an absolute value $|V_U|$ of the phase-U target voltage $V_U$ is more than an absolute value $|V_W|$ of a phase-W target voltage $V_W$, or when a phase-V detected electric-current $|I_V|$ and a phase-W detected electric-current $|I_W|$ are each more than a predetermined threshold value, determination is performed so that the phase-U is in an open failure; and thus, a determination result becomes "YES," and Step S804 is executed. When an absolute value $|V_U|$ of a phase-U target voltage $V_U$ is not more than an absolute value $|V_V|$ of a phase-V target voltage $V_V$ or an absolute value $|V_U|$ of the phase-U target voltage $V_U$ is not more than an absolute value $|V_W|$ of a phase-W target voltage $V_W$, or when any one of or both of a phase-V detected electric-current $|I_V|$ and a phase-W detected electric-current $|I_W|$ is/are at a predetermined threshold value or less, determination is performed so that the phase-U is not in an open failure; and thus, a determination result becomes ""NO," and the phase-U open-failure determination processing of FIG. 17 is ended. Note that, the predetermined threshold value used for the determination of the phase-V detected electric-current $|I_V|$ and for that of the phase-W detected electric-current $|I_W|$ is set at an appropriately predetermined threshold value depending on an adapted system.

Next, at Step S804, an increment process of a phase-U open-failure counter is executed.

The phase-U open-failure counter undergoes increment at a time when determination is performed so that the phase-U is in an open failure at Step S803; i.e., the phase-U open-failure counter is made of a counter for holding and adding up its count value from an increment operation start until a predetermined cumulative time being set in advance. In addition, the counter is cleared to zero after a time when the predetermined cumulative time has passed from the increment operation start. This is because the counter is provided for avoiding misoperation of determination at Step S802 and that at Step S803 due to disturbance or the like, and so, depending on an adapted system, the counter may be adopted in which only an ordinary increment operation is achieved. In that case, it is only necessary to use a counter in which the condition "within the predetermined cumulative time" on the determination condition at Step S805 is excluded. In addition, an appropriate value is set for the predetermined cumulative time in accordance with an adapted system.

Next, at Step S805, verification is performed whether or not the phase-U open-failure counter reaches at a predetermined count value within a predetermined cumulative time. Note that, an appropriate value is set for the predetermined count value in accordance with an adapted system.

When the phase-U open-failure counter reaches at the predetermined count value within the predetermined cumulative time, determination is performed so that the open failure of phase-U is confirmed; and thus, a determination result becomes "YES," and next Step S806 is executed. When the phase-U open-failure counter does not reach at the predetermined count value within the predetermined cumulative time, determination is performed so that an open failure of phase-U is not confirmed; and thus, a determination result becomes "NO," and the phase-U open-failure determination processing of FIG. 17 is ended.

Next, at Step S806, a phase-U failure determination flag which indicates "ON" when the open failure of phase-U has been confirmed is set to "ON," and the phase-U open-failure determination processing is ended. These described above constitute the processing contents of the phase-U open-failure determination processing of FIG. 17.

Next, the explanation will be made for processing contents of the phase-V open-failure determination processing of FIG. 18. Note that, the processing contents thereof take on processing contents of the phase-U open-failure determination processing whose phase is replaced to the phase-V, and so, the basic operations are equivalent to the processing contents each other although determination conditions at each Step differ from those. At Step S901, verification is performed whether or not a phase-U detected phase current $I_{U\_OFF}$, a phase-V detected phase current $I_{V\_OFF}$ and a phase-W detected phase current $I_{W\_OFF}$ stay within a predetermined normal range, where the phase-U detected phase current $I_{U\_OFF}$, the phase-V detected phase current $I_{V\_OFF}$ and the phase-W detected phase current $I_{W\_OFF}$ are detected at those times when gate drive signals with respect to the QLu, QLv and QLw being the lower arm drive elements are in turn-off F instructions among gate drive signals being output signals from the FET-gate drive unit 6. When a state continues for a predetermined time in which a phase-U detected phase current $I_{U\_OFF}$, a phase-V detected phase current $I_{V\_OFF}$ and a phase-W detected phase current $I_{W\_OFF}$ stay within a predetermined normal range, a determination result is defined as "YES," and next Step S902 is executed. When a state does not continue for the predetermined time in which a phase-U detected phase current $I_{U\_OFF}$, a phase-V detected phase current $I_{V\_OFF}$ and a phase-W detected phase current $I_{W\_OFF}$ stay within the predetermined normal range, a determination result is defined as "NO," and the phase-V open-failure determination processing of FIG. 18 is ended.

The determination processing at Step S901 is used for determining whether or not a short-circuit failure (s) of a lower arm drive element(s) in the motor driving device 7 is caused. In the exemplary embodiment, lower arm shunts are used in which the shunt resistors 8u, 8v and 8w are connected between lower arm drive elements in each phase and the ground, so that, at normal times, detected phase currents being detected and calculated by the detected phase-current calculation unit 15 take on their values in vicinity to 0 A at those times when the lower arm drive elements are in their turn-off states . However, when a lower arm drive element(s) undergoes a short-circuit failure(s), the lower arm drive element(s) takes on in an turn-on state at all times, so that a voltage (power source voltage) of the battery 18 being applied to the motor driving device 7 takes on a state in which the ground is short-circuited to, at a time when an upper arm drive element (s) turns on. Because of this, a detected phase current does not take on the vicinity of 0 A, whereas a short-circuit current (s) results in flowing through. In order to perform the determination described above, individual phase currents are used at the time when each of the lower arm drive elements is turned off, instead of using a detected phase current (s) at a time when each of the lower arm drive elements is turned on, where each of them is utilized at the time of the ordinary motor control.

Next, at Step S902, verification is performed whether or not parameter $|I_V|$ being an absolute value of a phase-V detected phase current $I_V$ is within a predetermined threshold value. As described in Expression (34), a phase-U detected phase current $I_U$ takes on its value in vicinity to 0 A, when a phase-U drive element(s) causes an open failure; however, similarly to the phase-U, a phase-V detected phase current $I_V$ takes on its value in vicinity to 0 A, also when a phase-V drive element (s) causes an open failure. Note that, the predetermined threshold value in use for the determination on the vicinity of 0 A or not is set at an appropriately predetermined threshold value in accordance with an adapted system. When an absolute value $|I_U|$ of a phase- U detected phase current $I_U$ is within a predetermined threshold value, a determination result is defined as "YES," and next Step S903 is executed. When an absolute value $|I_V|$ of the phase-V detected phase current $I_V$ is at the predetermined threshold value or more, a determination result is defined as "NO," and the phase-V open-failure determination processing of FIG. 18 is ended.

Next, at Step S903 which is a process-step for determining whether or not the phase-V is in an open failure, and so thereat, the determination processing of the aforementioned Expression (59) is executed by using an absolute value $|V_V|$ of a phase-V target voltage $V_V$, an absolute value $|V_U|$ of a phase-U target voltage $V_U$ and an absolute value $|V_W|$ of a phase-W target voltage $V_W$, and using a phase-U detected electric-current $|I_U|$ and a phase-W detected electric-current $|I_W|$. When an absolute value $|V_V|$ of a phase-V target voltage $V_V$ is more than an absolute value $|V_U|$ of a phase-U target voltage $V_U$ and also an absolute value $|V_V|$ of the phase-V target voltage $V_V$ is more than an absolute value $|V_W|$ of a phase-W target voltage $V_W$, or when a phase-U detected electric-current $|I_U|$ and a phase-W detected electric-current $|I_W|$ are each more than a predetermined threshold value, determination is performed so that the phase-U is in an open failure; and thus, a determination result becomes "YES," and Step S904 is executed. When an absolute value $|V_V|$ of a phase-V target voltage $V_V$ is not more than an absolute value $|V_U|$ of a phase-U target voltage $V_U$ or an absolute value $|V_V|$ of the phase-V target voltage $V_V$ is not more than an absolute value $|V_W|$ of a phase-W target voltage $V_W$, or when any one of or both of a phase-U detected electric-current $|I_U|$ and a phase-W detected electric-current $|I_W|$ is/are at a predetermined threshold value or less, determination is performed so that the phase-V is not in an open failure; and thus, a determination result becomes "NO, " and the phase-V open-failure determination processing of FIG. 18 is ended. Note that, the predetermined threshold value used for the determination of the phase-U detected electric-current $|I_U|$ and for that of the phase-W detected electric-current $|I_W|$ is set at an appropriately predetermined threshold value depending on an adapted system.

Next, at Step S904, an increment process of a phase-V open-failure counter is executed.

The phase-V open-failure counter undergoes increment at a time when determination is performed so that the phase-V is in an open failure at Step S 903; i.e. , the phase-V open-failure counter is made of a counter for holding and adding up its count value from an increment operation start until a predetermined cumulative time being set in advance. In addition, the counter is cleared to zero after a time when the predetermined cumulative time has passed from the increment operation start. This is because the counter is provided for avoiding misoperation of determination at Step S902 and that at Step S903 due to disturbance or the like, and so, depending on an adapted system, the counter may be adopted in which only an ordinary increment operation is achieved. In that case, it is only necessary to use a counter in which the condition "within the predetermined cumulative time" on the determination condition at Step S905 is excluded. In addition, an appropriate value is set for the aforementioned predetermined cumulative time in accordance with an adapted system.

Next, at Step S905, verification is performed whether or not the phase-V open-failure counter reaches at a predetermined count value within a predetermined cumulative time. Note that, an appropriate value is set for the predetermined count value in accordance with an adapted system.

When the phase-V open-failure counter reaches at the predetermined count value within the predetermined cumulative time, determination is performed so that the open failure of phase-V is confirmed; and thus, a determination result becomes "YES," and next Step S906 is executed. When the phase-V open-failure counter does not reach at the predetermined count value within the predetermined cumulative time, determination is performed so that an open failure of phase-V is not confirmed; and thus, a determination result becomes "NO," and the phase-V open-failure determination processing of FIG. 18 is ended.

Next, at Step S906, a phase-V failure determination flag which indicates "ON" when the open failure of phase-V has been confirmed is set to "ON," and the phase-U open-failure determination processing described above is ended. These described above constitute the processing contents of the phase-V open-failure determination processing of FIG. 18.

Next, the explanation will be made for processing contents of the phase-W open-failure determination processing of FIG. 19. Note that, the processing contents thereof take on processing contents of the phase-U open-failure determination processing and on those of the phase-V open-failure determination processing described above in which their phases are replaced to the phase-W, and so, the basic operations are equivalent to the processing contents one another although determination conditions at each Step differ from those. At Step S1001, verification is performed whether or not a state continues for a predetermined time in which a phase-U detected phase current $I_{U\_OFF}$, a phase-V detected phase current $I_{V\_OFF}$ and a phase-W detected phase current $I_{W\_OFF}$ stay within a predetermined normal range, where the phase-U detected phase current $I_{U\_OFF}$, the phase-V detected phase current $I_{V\_OFF}$ and the phase-W detected phase current $I_{W\_OFF}$ are detected at those times when gate drive signals with respect to the QLu, QLv and QLw being the lower arm drive elements are in turn-off instructions among gate drive signals being output signals from the FET-gate drive unit 6. When a state continues for a predetermined time in which a phase-U detected phase current $I_{U\_OFF}$, a phase-V detected phase current $I_{V\_OFF}$ and a phase-W detected phase current $I_{W\_OFF}$ stay within a predetermined normal range, a determination result is defined as "YES, " and next Step S1002 is executed. When a state does not continue for the predetermined time in which a phase-U detected phase current $I_{U\_OFF}$, a phase-V detected phase current $I_{V\_OFF}$ and a phase-W detected phase current $I_{W\_OFF}$ stay within the predetermined normal range, a determination result is defined as "NO," and the phase-W open-failure determination processing of FIG. 19 is ended.

The determination processing at Step S1001 is used for determining whether or not a short-circuit failure (s) of a lower arm drive element(s) in the motor driving device 7 is caused. In the exemplary embodiment, lower arm shunts are used in which the aforementioned shunt resistors 8u, 8v and 8w are connected between lower arm drive elements in each phase and the ground, so that, at normal times, detected phase currents being detected and calculated by the detected phase-current calculation unit 15 take on their values in vicinity to 0 A at those times when the lower arm drive elements are in their turn-off states. However, when a lower arm drive element (s) undergoes a short-circuit failure (s), the lower arm drive element (s) takes on in an turn-on state at all times, so that a voltage (power source voltage) of the battery 18 being applied to the motor driving device 7 takes on a state in which the ground is short-circuited to, at a time when an upper arm drive element (s) turns on. Because of this, a detected phase current does not take on the vicinity of 0 A, whereas a short-circuit current (s) results in flowing through. In order to perform the determination described above, individual phase currents are used at the time when each of the lower arm drive elements is turned off, instead of using a detected phase current(s) at a time when each of the lower arm drive elements is turned on, where each of them is utilized at the time of the ordinary motor control.

Next, at Step S1002, verification is performed whether or not parameter $|I_W|$ being an absolute value of a phase-W detected phase current $I_W$ is within a predetermined threshold value. As described in Expression (34), a phase-U detected phase current $I_U$ takes on its value in vicinity to 0 A, when a phase-U drive element(s) causes an open failure; however, similarly to the phase-U, a phase-W detected phase current $I_W$ takes on its value in vicinity to 0 A, also when a phase-W drive element(s) causes an open failure. Note that, the predetermined threshold value in use for the determination on the vicinity of 0 A or not is set at an appropriately predetermined threshold value in accordance with an adapted system. When an absolute value $|I_W|$ of a phase-W detected phase current $I_W$ is within a predetermined threshold value, a determination result is defined as "YES," and next Step S1003 is executed. When an absolute value $|I_W|$ of the phase-W detected phase current $I_W$ is at the predetermined threshold value or more, a determination result is defined as "NO," and the phase-W open-failure determination processing of FIG. 19 is ended.

Next, at Step S1003 which is a process-step for determining whether or not the phase-W is in an open failure, and so thereat, the determination processing of Expression (60) described above is executed by using an absolute value $|V_W|$ of a phase-W target voltage $V_W$, an absolute value $|V_V|$ of a phase-V target voltage $V_V$ and an absolute value $|V_U|$ of a phase-U target voltage $V_U$, and using a phase-U detected electric-current $|I_W|$ and a phase-V detected electric-current $|I_V|$. When an absolute value $|V_W|$ of a phase-W target voltage $V_W$ is more than an absolute value $|V_U|$ of a phase-U target voltage $V_U$ and also an absolute value $|V_W|$ of the phase-W target voltage $V_W$ is more than an absolute value $|V_V|$ of a phase-V target voltage $V_V$, or when a phase-U detected electric-current $|I_U|$ and a phase-V detected electric-current $|I_V|$ are each more than a predetermined threshold value, determination is performed so that the phase-W is in an open failure; and thus, a determination result becomes "YES," and Step S1004 is executed. When an absolute value $|V_W|$ of a phase-W target voltage $V_W$ is not more than an absolute value $|V_U|$ of a phase-U target voltage $V_U$ or an absolute value $|V_W|$ of the phase-W target voltage $V_W$ is not more than an absolute value $|V_U|$ of a phase-U target voltage $V_V$, or when any one of or both of a phase-U detected electric-current $|I_U|$ and a phase-V detected electric-current $|I_V|$ is/are at a predetermined threshold value or less, determination is performed so that the phase-W is not in an open failure; and thus, a determination result becomes "NO, " and the phase-W open-failure determination processing of FIG. 19 is ended. Note that, the predetermined threshold value used for the determination of the phase-U detected electric-current $|I_u|$ and for that of the phase-V detected electric-current $|I_V|$ is set at an appropriately predetermined threshold value depending on an adapted system.

Next, at Step S1004, an increment process of a phase-W open-failure counter is executed.

The phase-W open-failure counter undergoes increment at a time when determination is performed so that the phase-W is in an open failure at Step S1003; i.e. , the phase-W open-failure counter is made of a counter for holding and adding up its count value from an increment operation start until a predetermined cumulative time being set in advance. In addition, the counter is cleared to zero after a time when the predetermined cumulative time has passed from the increment operation start. This is because the counter is provided for avoiding misoperation of determination at Step S1002 and that at Step S1003 due to disturbance or the like, and so, depending on an adapted system, the counter may be adopted in which only an ordinary increment operation is achieved. In that case, it is only necessary to use a counter in which the condition "within the predetermined cumulative time" on the determination condition at Step S1005 is excluded. In addition, an appropriate value is set for the predetermined cumulative time in accordance with an adapted system.

Next, at Step S1005, verification is performed whether or not the phase-W open-failure counter reaches at a predetermined count value within a predetermined cumulative time. Note that, an appropriate value is set for the predetermined count value in accordance with an adapted system.

When the phase-W open-failure counter reaches at the predetermined count value within the predetermined cumulative time, determination is performed so that the open failure of phase-W is confirmed; and thus, a determination result becomes "YES," and next Step S1006 is executed. When the phase-W open-failure counter does not reach at the predetermined count value within the predetermined cumulative time, determination is performed so that an open failure of phase-W is not confirmed; and thus, a determination result becomes "NO," and the phase-W open-failure determination processing of FIG. 19 is ended.

Next, at Step S1006, a phase-W failure determination flag which indicates "ON" when the open failure of phase-W has been confirmed is set to "ON," and the phase-W open-failure determination processing is ended. These described above constitute the processing contents of the phase-W open-failure determination processing of FIG. 19.

The explanation made above forms the processing contents of the individual phase open-failure determination processing executed in accordance with the processing procedures shown in FIG. 16. Next, at Step S703 of FIG. 16, determination is performed whether or not only the phase-U is in an open failure. As for the determination, used are a phase-U failure determination flag, a phase-V failure determination flag and a phase-W failure determination flag in the phase-U open-failure determination processing, in the phase-V open-failure determination processing and in the phase-W open-failure determination processing within Step S702, respectively. When the phase-U failure determination flag indicates "ON, " and when the phase-V failure determination flag and the phase-W failure determination flag indicate "OFF," a determination result becomes "YES," and next Step S704 is executed. In a case other than the conditions in which the phase-U failure determination flag indicates "ON," and which the phase-V failure determination flag and the phase-W failure determination flag indicate "OFF," a determination result becomes "NO," and next Step S705 is executed.

At Step S704, an open failure result being an output of the open failure determination unit 22 is set for a phase-U open failure, and the signal of open failure result, Rof, is outputted into the cutoff management unit 17.

At Step S705, determination is performed whether or not only the phase-V is in an open failure . As for the determination, used are a phase-U failure determination flag, a phase-V failure determination flag and a phase-W failure determination flag in the phase-U open-failure determination processing, in the phase-V open-failure determination processing and in the phase-W open-failure determination processing within Step S702, respectively. When the phase-V failure determination flag indicates "ON, " and when the phase-U failure determination flag and the phase-W failure determination flag indicate "OFF," a determination result becomes "YES," and next Step S706 is executed. In a case other than the conditions in which the phase-V failure determination flag indicates "ON," and which the phase-U failure determination flag and the phase-W failure determination flag indicate "OFF," a determination result becomes "NO," and next Step S707 is executed.

At Step S706, an open failure result being an output of the open failure determination unit 22 is set for a phase-V open failure, and the signal of open failure result, Rof, is outputted into the cutoff management unit 17.

At Step S707, determination is performed whether or not only the phase-W is in an open failure . As for the determination, used are a phase-U failure determination flag, a phase-V failure determination flag and a phase-W failure determination flag in the phase-U open-failure determination processing, in the phase-V open-failure determination processing and in the phase-W open-failure determination processing within Step S702, respectively. When the phase-W failure determination flag indicates "ON, " and when the phase-U failure determination flag and the phase-V failure determination flag indicate "OFF," a determination result becomes "YES," and next Step S708 is executed. In a case other than the conditions in which the phase-W failure determination flag indicates "ON," and which the phase-U failure determination flag and the phase-W failure determination flag indicate "OFF," determination is performed so that the failure is other than an open failure of only phase-U, that of only phase-V or that of only phase-WW, and a determination result becomes "NO," so that next Step S709 is executed.

At Step S708, an open failure result being an output of the open failure determination unit 22 is set for a phase-W open failure, and the signal of open failure result, Rof, is outputted into the cutoff management unit 17.

At Step S709 which is executed when a determination result has been "NO" at Step S707, an increment process of a failure counter is executed.

The failure counter undergoes increment at a time other than a time when one open-failure determination flag is set "ON" among a phase-U open-failure determination flag having been confirmed in the phase-U failure determination processing of FIG. 17, a phase-V open-failure determination flag having been confirmed in the phase-V failure determination processing of FIG. 18 and a phase-W open-failure determination flag having been confirmed in the phase-W failure determination processing of FIG. 19 each of which is executed at Step S702; i.e., the failure counter is made of a counter for holding and adding up its count value from an increment operation start until a predetermined cumulative time being set in advance. In addition, the counter is cleared to zero after a time when the predetermined cumulative time has passed from the increment operation start. Note that, depending on an adapted system, the counter may be adopted in which only an ordinary increment operation is achieved. In that case, it is only necessary to use a counter in which the condition "within the predetermined cumulative time" on the determination condition at Step S710 is excluded. In addition, the predetermined cumulative time is set at an appropriate value in accordance with an adapted system while being grounded on the basis of a predetermined cumulative time being adaptive to the phase-U open-failure counter which undergoes increment in the phase-U failure determination processing of FIG. 17, the phase-V open-failure counter which undergoes increment in the phase-V failure determination processing of FIG. 18 and the phase-W open-failure counter being confirmed which undergoes increment in the phase-W failure determination processing of FIG. 19, which are executed at Step S702.

Next, at Step S710, verification is performed whether or not the failure counter reaches at a predetermined count value within the predetermined cumulative time. Note that, the predetermined count value is set at an appropriate value in accordance with an adapted system while being grounded on the basis of a predetermined count value being adaptive to Step S805 in the phase-U failure determination processing of FIG. 17, Step S905 in the phase-V failure determination processing of FIG. 18 and Step S1005 in the phase-W failure determination processing of FIG. 19.

When the failure counter reaches at the predetermined count value within the predetermined cumulative time, determination is performed so that the failure other than an open failure of any one phase only among the phase-U, phase-V and phase-W is confirmed; and thus, the determination result becomes "YES, " and next Step S711 is executed. When the failure counter does not reach at the predetermined count value within the predetermined cumulative time, determination is performed so that a failure other than an open failure of any one phase only among the phase-U, phase-V and phase-W is not confirmed; and thus, the determination result becomes "NO," and the processing of the open failure determination unit of FIG. 16 is ended.

Subsequently, at Step S711, an open failure result being an output of the open failure determination unit 22 is set as miscellaneous or "others," and a signal of open failure result, Rof, is outputted into the cutoff management unit 17.

These described above constitute the explanation of the processing in the open failure determination unit 22 of FIG. 15. Note that, after failure determination is performed by the open failure determination unit 22, and a failure determination result being an output therefrom has been confirmed, the open failure determination unit 22 does not operate for a second time.

Next, the explanation is made for processing contents of the cutoff management unit 17 of FIG. 15. In Embodiment 2, modifications are added to the processing contents of the cutoff management unit 17 in Embodiment 1; and so, the cutoff management unit includes the function to perform determination of motor drive-operation continuity in multiple phases other than an open failure phase and determination of a motor drive-operation halt in accordance with an open failure result being an output of the open failure determination unit 22, and the function to output instructions in accordance with a determination result (s) with respect to the control calculation unit 4, the FET-gate-driving cutoff unit 5, the motor current cutoff unit 9 and the battery voltage cutoff unit 19.

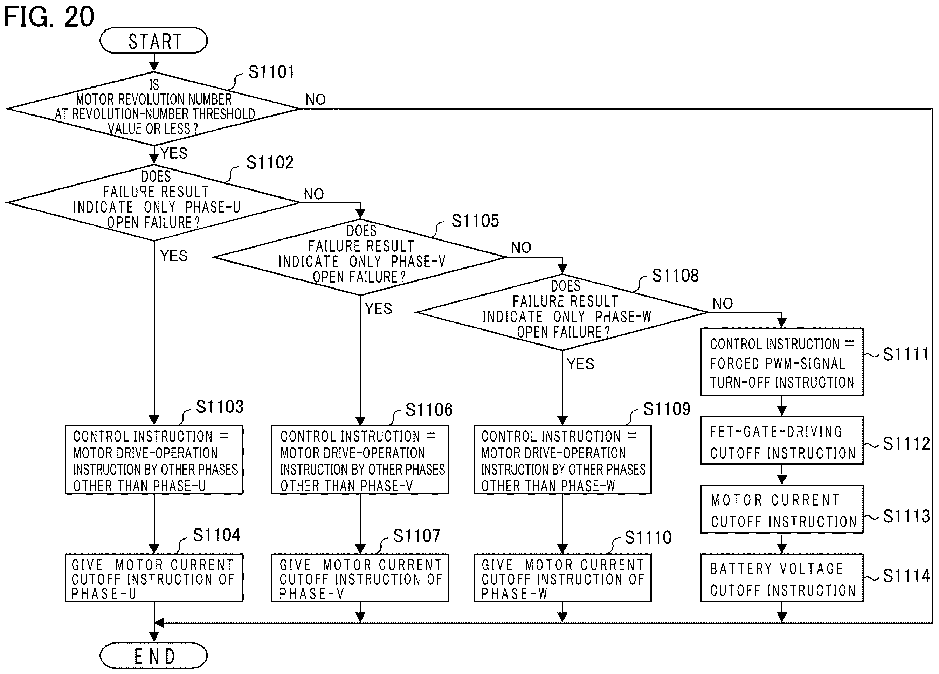

FIG. 20 is a flow chart showing the processing contents of the cutoff management unit 17. The processing of FIG. 20 carried out by the cutoff management unit 17 is periodic processing which is carried out in a predetermined period being defined in advance, and so, the flows of FIG. 20 are executed all the time in the predetermined period. Note that, the predetermined period is defined as an optimum period to an adapted system while being grounded on the basis of an execution period of the processing in the abnormal torque estimation unit 16, the detected phase-current abnormality detection unit 21, the open failure determination unit 22, the electric-current instruction calculation unit 3 and the control calculation unit 4 each.

Firstly, at Step S1101, determination is performed whether or not a motor revolution number calculated from an electrical angle $\theta$ obtained by the electrical angle calculation unit 14 is at a revolution-number threshold value being set in advance or less.

In a surface permanent magnet type motor, its induced voltages proportional to the number of revolutions of the motor, i.e. a motor revolution number, are generated. Electric currents capable of being flowed through the motor 10 are limited by voltage differences between the induced voltages in accordance with the rotation of the motor and a battery voltage.

Due to the phenomenon, line currents flowing through the motor are reduced with respect to instruction electric-currents calculated from detection torque detected by the torque detector 2, whereby it is feared that individual phase detected electric-currents $I_u$, $I_v$ and $I_w$ result in having electric current deviations with respect to targeted individual phase currents $I_{u\_t}$, $I_{v\_t}$ and $I_{w\_t}$ being expected values, and that a value of electric-current deviation difference maximum-value $\Delta I_{Diff}$ being a calculation result of the abnormal torque estimation unit 16 takes on a threshold value being set or more, so that erroneous determination may be induced. For this reason, it can be known that, as a monitoring condition, Step S1001 being the monitoring condition of a motor revolution number is set in the processing flows of FIG. 20.

It is so arranged that, by obeying a battery voltage Vba detected by the battery voltage detection unit 20, the revolution-number threshold value being the monitoring condition of the motor revolution number undergoes a variable operation; and so, for example, the revolution-number threshold value is determined in such a manner that the number of revolutions to reach at a voltage saturation is prepared on a battery voltage basis as a map in advance, and a battery voltage Vba detected in a certain constant period is checked against the map. In addition, after having taken an operationally capable voltage(s) of system into consideration, it may be adopted that, without carrying out the variable operation of a revolution-number threshold value in accordance with a battery voltage Vba, a revolution-number fixed-value which does not induce erroneous determination is used for the revolution-number threshold value.

When a motor revolution number is at a predetermined revolution-number threshold value or less at Step S1101 described above, a determination result is defined as "YES," and Step S1102 is executed. When a motor revolution number is more than the predetermined revolution-number threshold value, a determination result is defined as "NO," and the processing of FIG. 20 in the cutoff management unit 17 is ended.

Next, at Step S1102, verification is performed whether or not a signal of open failure result, Rof, being an output of the open failure determination unit 22 indicates only a phase-U open failure. When a signal of open failure result, Rof, being an output of the open failure determination unit 22 indicates only a phase-U open failure, a determination result is defined as "YES, " and Step S1103 is executed. When the signal of open failure result, Rof, being an output of the open failure determination unit 22 does not indicate only a phase-U open failure, a determination result is defined as "NO," and Step S1105 is executed.

At Step S1103 which is executed when a determination result of Step S1102 is "YES," a control instruction being an output of the cutoff management unit 17 and also being an instruction toward the control calculation unit 4 is defined as a motor drive-operation instruction by other phases other than the phase-U, and, at next Step S1104, a motor current cutoff instruction INci of phase-U is given with respect to the motor current cutoff unit 9.

Note that, the motor current cutoff unit 9 performs a cutoff operation on a phase-U motor current cutoff portion within the motor current cutoff unit 9 by obeying the motor current cutoff instruction INci of phase-U being an output from the cutoff management unit 17, whereby an electric current path of phase-U motor line is interrupted; and the control calculation unit 4 carries out motor drive-operation continuity by other phases other than the phase-U being the failure phase by obeying a motor drive-operation instruction being the control instruction INco from the cutoff management unit 17 by the other phases other than the phase-U. As for a motor drive-operation continuity process by other phases other than a failure phase, any process may be used if it is made possible to achieve the process.

When a determination result is "NO" at Step S1102, verification is performed at Step S1105 whether or not the signal of open failure result, Rof, being an output of the open failure determination unit 22 indicates only a phase-V open failure. When the signal of open failure result, Rof, being an output of the open failure determination unit 22 indicates only a phase-V open failure, a determination result is defined as "YES," and Step S1106 is executed. When the open failure result being an output of the open failure determination unit 22 does not indicate only a phase-V open failure, a determination result is defined as "NO," and Step S1108 is executed.

At Step S1106 which is executed when a determination result of Step S1105 is "YES," a control instruction INco being an output of the cutoff management unit 17 and also being an instruction toward the control calculation unit 4 is defined as a motor drive-operation instruction by other phases other than the phase-V, and, at next Step S1107, a motor current cutoff instruction INci of phase-V is given with respect to the motor current cutoff unit 9.

Note that, the motor current cutoff unit 9 performs a cutoff operation on a phase-V motor current cutoff portion within the motor current cutoff unit 9 by obeying the motor current cutoff instruction INci of phase-V being an output from the cutoff management unit 17, whereby an electric current path of phase-V motor line is interrupted; and the control calculation unit 4 carries out motor drive-operation continuity by other phases other than the phase-V being the failure phase by obeying a motor drive-operation instruction being the control instruction from the cutoff management unit 17 by the other phases other than the phase-V. As for a motor drive-operation continuity process by other phases other than a failure phase, any process may be used if it is made possible to achieve the process.

When a determination result is "NO" at Step S1105, verification is performed at Step S1108 whether or not the signal of open failure result, Rof, being an output of the open failure determination unit 22 indicates only a phase-W open failure. When the signal of open failure result, Rof, being an output of the open failure determination unit 22 indicates only a phase-V open failure, a determination result is defined as "YES," and Step S1106 is executed. When the signal of open failure result, Rof, being an output of the open failure determination unit 22 does not indicate only a phase-W open failure, a determination result is defined as "NO," and Step S1111 is executed.

At Step S1109 which is executed when a determination result of Step S1108 is "YES," a control instruction INco being an output of the cutoff management unit 17 and also being an instruction toward the control calculation unit 4 is defined as a motor drive-operation instruction by other phases other than the phase-W, and, at next Step S1110, a motor current cutoff instruction INci of phase-W is given with respect to the motor current cutoff unit 9.

Note that, the motor current cutoff unit 9 performs a cutoff operation on a phase-W motor current cutoff portion within the motor current cutoff unit 9 by obeying the motor current cutoff instruction of phase-W being an output from the cutoff management unit 17, whereby an electric current path of phase-W motor line is interrupted; and the control calculation unit 4 carries out motor drive-operation continuity by other phases other than the phase-W being the failure phase by obeying a motor drive-operation instruction being the control instruction from the cutoff management unit 17 by the other phases other than the phase-W. As for a motor drive-operation continuity process by other phases other than a failure phase, any process may be used if it is made possible to achieve the process.

When a determination result is "NO" at Step S1108, determination is performed so that an open failure of only one phase is not applicable to, because an open failure result being an output of the open failure determination unit 22 is set as miscellaneous or "others." And so, the cutoff management unit 17 outputs at Step S1111 a forced PWM-signal turn-off instruction as an instruction into the control calculation unit 4; the cutoff management unit outputs at Step S1112 an FET-gate-driving cutoff instruction into the FET-gate-driving cutoff unit 5; the cutoff management unit outputs at Step S1113 a motor current cutoff instruction into the motor current cutoff unit 9; and the cutoff management unit outputs at Step S1114 a battery voltage cutoff instruction into the battery voltage cutoff unit 19.

According to the processing at Step S1111, Step S1112, Step S1113 and Step S1114, the control calculation unit 4 halts its outputs of a phase-U PWM signal S-PWM(U), a phase-V PWM signal S-PWM(V) and a phase-W PWM signal S-PWM(W); the FET-gate-driving cutoff unit 5 halts its outputs into the FET-gate drive unit 6; in the motor current cutoff unit 9, motor currents of all of the phases are interrupted; and the battery voltage cutoff unit 19 interrupts the applied voltage, a voltage (power source voltage) from the battery 18, therefrom through into the motor driving device 7, whereby the output torque of the motor 10 is made to become 0 (zero), and so, the motor's drive operation is then halted.

These described above constitute the processing contents of the cutoff management unit 17 which executes them in accordance with the processing procedures shown in FIG. 20. In accordance with the signal of open failure result, Rof, being an output of the open failure determination unit 22, the cutoff management unit performs go/no-go determination of motor drive-operation continuity, and carries out individual instructions at the time of the determination.

In Embodiment 2, described therefor are failure determination processing at a time of an open failure of an FET (s) being a drive element (s) of the motor driving device 7, and motor drive-operation continuity go/no-go determination, a motor drive-operation continuity process with respect to the motor drive-operation continuity go/no-go determination and a motor drive-operation halt process therewith; however, by means of similar processing, it is also possible to perform failure determination such as the determination at a time of a disconnection failure of the motor 10, and that at a time of an open failure of the motor current cutoff unit 9, and so, it is not always limited to only the time of an open failure of an FET (s) being a drive element (s) in the motor driving device 7.

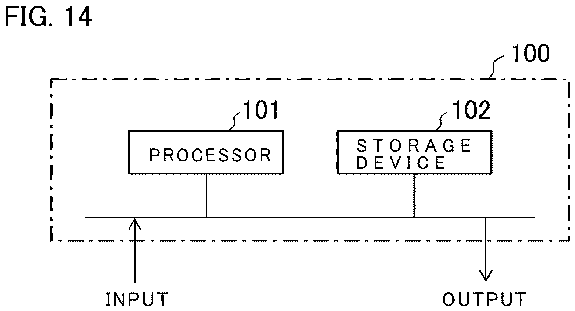

It should be noted that, as an example of the hardware is shown in FIG. 14, the motor control device 100 is constituted of a processor 101 and a storage device 102. The storage device 102 is provided with a volatile storage device of a random access memory (RAM) or the like, and with a nonvolatile auxiliary storage device of a flash memory or the like, for example. In addition, in place of the flash memory, an auxiliary storage device of a hard disk may be provided with. The processor 101 executes a program (s) inputted from the storage device 102. In this case, the program(s) is inputted into the processor 101 from the auxiliary storage device by way of the volatile storage device. Moreover, the processor 101 may output its data of a calculated result(s) or the like into the volatile storage device of the storage device 102, or may store the data into the auxiliary storage device by way of the volatile storage device.

In the present disclosure of the application concerned, various exemplary embodiments and implementation examples are described; however, various features, aspects and functions described in one or a plurality of embodiments are not necessarily limited to the applications of a specific embodiment(s), but are applicable in an embodiment(s) solely or in various combinations.

Therefore, limitless modification examples not being exemplified can be presumed without departing from the scope of the technologies disclosed in Description of the disclosure of the application concerned. For example, there arise cases which are included as a case in which at least one constituent element is modified, added or eliminated, and further a case in which at least one constituent element is extracted and then combined with a constituent element(s) of another embodiment. Explanation of Numerals and Symbols

Numeral "1" designates a steering wheel; "2," torque detector; "3," electric-current instruction calculation unit; "4," control calculation unit; "5," FET-gate-driving cutoff unit; "6," FET-gate drive unit; "7," motor driving device; "10," motor; "13," rotor's rotational position detector; "14," electrical angle calculation unit; "15," detected phase-current calculation unit; "16," abnormal torque estimation unit; "17," cutoff management unit; "21," detected phase-current abnormality detection unit; "22," open failure determination unit; and "100," motor control device.

**Claims**

1. A motor control device, comprising:

   an electric-current instruction calculation unit for determining target electric-current values of a motor of multiple phases;
   a detected phase-current calculation unit for obtaining detected electric-current values by detecting electric currents of phases each flowing through the motor;
   a control calculation unit for calculating electric-current instructions to control motor electric-currents each on a basis of the target electric-current values and on that of the detected electric-current values;
   an electrical angle calculation unit for calculating, from a rotational position of a rotor of the motor, an electrical angle being a phase difference between a rotational position of the rotor and a coil of the motor;
   an abnormal torque estimation unit for estimating abnormality of torque of the motor from the target electric-

**EP 4 329 190 A1**

current values, the detected electric-current values and the electrical angle; and
a cutoff management unit for halting a drive operation of the motor if the torque thereof is abnormal.

2. The motor control device as set forth in claim 1, wherein the cutoff management unit halts a drive operation of the motor when determination is performed so that a change of torque estimated by the abnormal torque estimation unit is abnormal.

3. The motor control device as set forth in claim 1 or claim 2, wherein the cutoff management unit does not halt a drive operation of the motor, when a motor revolution number calculated from an electrical angle obtained by the electrical angle calculation unit exceeds a revolution-number threshold value being set in advance.

4. The motor control device as set forth in claim 3, wherein the revolution-number threshold value is changed in accordance with a voltage inputted into the motor.

5. The motor control device as set forth in claim 1, further comprising:

   a detected phase-current abnormality detection unit for detecting abnormality in the detected phase-current calculation unit; and
   an open failure determination unit for determining, by using a detected phase current of the detected phase-current calculation unit and a voltage instruction of the control calculation unit, a phase in which an open failure is caused at a time when torque of the motor is estimated being abnormal by the abnormal torque estimation unit, and also at a time when the detected phase-current abnormality detection unit determines abnormality in the detected phase-current calculation unit, wherein
   the cutoff management unit continues or halts a drive operation of the motor in accordance with a determination result of the open failure determination unit.

6. The motor control device as set forth in claim 5, wherein

   the open failure determination unit determines that an open failure is caused in a selected phase in a case in which a detected phase current of a selected phase from the detected phase-current calculation unit is at a predetermined value defined in advance or less, and also an absolute value of the voltage instruction of a selected phase from the control calculation unit is larger than an absolute value of the voltage instruction of another phase from the control calculation unit; or
   the open failure determination unit determines that an open failure is caused in a selected phase in a case in which an absolute value of a phase current of a selected phase from the detected phase-current calculation unit is at a predetermined value defined in advance or less, and also any one of absolute values of phase currents of other phases from the detected phase-current calculation unit is larger than a predetermined value defined in advance.

7. The motor control device as set forth in claim 5 or claim 6, wherein the detected phase-current abnormality detection unit calculates a total sum-value of individual phase detected electric-current values detected by the detected phase-current calculation unit, and determines that a detected phase current of the detected phase-current calculation unit is abnormal, when the total sum-value is at a predetermined threshold value defined in advance or more.

8. The motor control device as set forth in any one of claims 5 through 7, wherein the cutoff management unit does not perform a continuity process in a drive operation of the motor nor a halt process therein, when a motor revolution number calculated from an electrical angle obtained by the electrical angle calculation unit exceeds a revolution-number threshold value being set in advance.

9. The motor control device as set forth in claim 8, wherein the revolution-number threshold value is varied in accordance with a voltage inputted into the motor.

10. The motor control device as set forth in any one of claims 5 through 9, wherein, in a case in which an open failure is determined by the open failure determination unit, and also a case in which at least an open failure of a single phase only is caused, the cutoff management unit is provided with a function to continue a motor drive operation by other phases in which an open failure of the single phase only is not caused, and a function to halt a motor drive operation when an open failure of the single phase only is not caused.

31

**11.** An electric power steering device, comprising:

the motor control device as set forth in any one of claims 1 through 10, wherein
the electric power steering device gives steering assist torque by the motor with respect to a vehicle wheel of an automotive vehicle.

FIG. 1

EP 4 329 190 A1

# FIG. 2

| STEERING TORQUE DETECTION | ~201 |
| ELECTRIC-CURRENT INSTRUCTION CALCULATION | ~301 |

t1~

Iq_t(n-1),
Id_t(n-1)

| ABNORMAL TORQUE ESTIMATION |
| \\1601 |

~t0

| ELECTRICAL ANGLE DETECTION | ~1401 |
| PHASE-CURRENT DETECTION | ~1501 |
| DETECTED ELECTRIC-CURRENTS' THREE-TO TWO-PHASE TRANSFORMATION | ~401 |
| TARGET q-AXIS VOLTAGE/TARGET d-AXIS VOLTAGE CALCULATION PROCESS | ~402 |
| TARGET VOLTAGES' TWO- TO THREE-PHASE TRANSFORMATION | ~403 |
| PWM OUTPUT | ~404 |

| ELECTRICAL ANGLE DETECTION | ~1401 |
| PHASE-CURRENT DETECTION | ~1501 |
| DETECTED ELECTRIC-CURRENTS' THREE-TO TWO-PHASE TRANSFORMATION | ~401 |
| TARGET q-AXIS VOLTAGE/TARGET d-AXIS VOLTAGE CALCULATION PROCESS | ~402 |
| TARGET VOLTAGES' TWO- TO THREE-PHASE TRANSFORMATION | ~403 |
| PWM OUTPUT | ~404 |

| ELECTRICAL ANGLE DETECTION | ~1401 |
| PHASE-CURRENT DETECTION | ~1501 |
| DETECTED ELECTRIC-CURRENTS' THREE-TO TWO-PHASE TRANSFORMATION | ~401 |
| TARGET q-AXIS VOLTAGE/TARGET d-AXIS VOLTAGE CALCULATION PROCESS | ~402 |
| TARGET VOLTAGES' TWO- TO THREE-PHASE TRANSFORMATION | ~403 |
| PWM OUTPUT | ~404 |

θ (k-2)

Iq_m(k-2)
Id_m(k-2)

Iq_t(n-1),
Id_t(n-1)

| ELECTRICAL ANGLE DETECTION | ~1401 | Iu(k-2) |
| PHASE-CURRENT DETECTION | ~1501 | Iv(k-2) |
| DETECTED ELECTRIC-CURRENTS' THREE-TO TWO-PHASE TRANSFORMATION | ~401 | Iw(k-2) |
| TARGET q-AXIS VOLTAGE/TARGET d-AXIS VOLTAGE CALCULATION PROCESS | ~402 | Vu(k-2) |
| TARGET VOLTAGES' TWO- TO THREE-PHASE TRANSFORMATION | ~403 | Vv(k-2) |
| PWM OUTPUT | ~404 | Vw(k-2) |

θ (k-1)

Iq_m(k-1)
Id_m(k-1)

| ELECTRICAL ANGLE DETECTION | ~1401 | Iu(k-1) |
| PHASE-CURRENT DETECTION | ~1501 | Iv(k-1) |
| DETECTED ELECTRIC-CURRENTS' THREE-TO TWO-PHASE TRANSFORMATION | ~401 | Iw(k-1) |
| TARGET q-AXIS VOLTAGE/TARGET d-AXIS VOLTAGE CALCULATION PROCESS | ~402 | Vu(k-1) |
| TARGET VOLTAGES' TWO- TO THREE-PHASE TRANSFORMATION | ~403 | Vv(k-1) |
| PWM OUTPUT | ~404 | Vw(k-1) |

201

| STEERING TORQUE DETECTION |
| ELECTRIC-CURRENT INSTRUCTION CALCULATION |
| \\301 |

θ (k)

Iq_m(k)
Id_m(k)

Iq_t(n), Id_t(n)

| ELECTRICAL ANGLE DETECTION | ~1401 | Iu(k) |
| PHASE-CURRENT DETECTION | ~1501 | Iv(k) |
| DETECTED ELECTRIC-CURRENTS' THREE-TO TWO-PHASE TRANSFORMATION | ~401 | Iw(k) |
| TARGET q-AXIS VOLTAGE/TARGET d-AXIS VOLTAGE CALCULATION PROCESS | ~402 | Vu(k) |
| TARGET VOLTAGES' TWO- TO THREE-PHASE TRANSFORMATION | ~403 | Vv(k) |
| PWM OUTPUT | ~404 | Vw(k) |

| ABNORMAL TORQUE ESTIMATION |
| \\1601 |

| ELECTRICAL ANGLE DETECTION | ~1401 |
| PHASE-CURRENT DETECTION | ~1501 |
| DETECTED ELECTRIC-CURRENTS' THREE-TO TWO-PHASE TRANSFORMATION | ~401 |
| TARGET q-AXIS VOLTAGE/TARGET d-AXIS VOLTAGE CALCULATION PROCESS | ~402 |
| TARGET VOLTAGES' TWO- TO THREE-PHASE TRANSFORMATION | ~403 |
| PWM OUTPUT | ~404 |

## FIG. 3

q-AXIS CURRENT

## FIG. 4

## FIG. 5

## FIG. 6

```
                    START

ELECTRIC CURRENT DEVIATION ΔIu = Iu_t − Iu(k)     S201

ELECTRIC CURRENT DEVIATION ΔIv = Iv_t − Iv(k)     S202

ELECTRIC CURRENT DEVIATION ΔIw = Iw_t − Iw(k)     S203

                    END
```

## FIG. 7

```
                    START

MINIMUM VALUE OF ELECTRIC CURRENT
DEVIATION = ELECTRIC CURRENT DEVIATION ΔIu     S301

S302
IS ELECTRIC CURRENT
DEVIATION ΔIv SMALLER THAN      NO
MINIMUM VALUE OF ELECTRIC
CURRENT DEVIATION?                                        S304
                                                IS ELECTRIC CURRENT
           YES                                  DEVIATION ΔIw SMALLER THAN      NO
                                                MINIMUM VALUE OF ELECTRIC
                                                CURRENT DEVIATION?

                                                           YES        S305
                    S303
MINIMUM VALUE OF ELECTRIC CURRENT          MINIMUM VALUE OF ELECTRIC CURRENT
DEVIATION = ELECTRIC CURRENT DEVIATION ΔIv  DEVIATION = ELECTRIC CURRENT DEVIATION ΔIw

                    END
```

## FIG. 8

```
                    ┌──────────┐
                    │  START   │
                    └────┬─────┘
                         │
   ┌─────────────────────┴──────────────────────┐
   │ MAXIMUM VALUE OF ELECTRIC CURRENT           │── S401
   │ DEVIATION = ELECTRIC CURRENT DEVIATION ΔIu  │
   └─────────────────────┬──────────────────────┘
                         │            S402
                    ◇────┴────◇
               IS ELECTRIC CURRENT
               DEVIATION ΔIv LARGER THAN      NO
               MAXIMUM VALUE OF ELECTRIC  ─────────────┐
               CURRENT DEVIATION?                      │
                    ◇─────────◇                        │      S404
                         │                        ◇────┴────◇
                      YES│                   IS ELECTRIC CURRENT      NO
                         │                   DEVIATION ΔIw LARGER THAN ──────┐
                         │                   MAXIMUM VALUE OF ELECTRIC       │
                         │                   CURRENT DEVIATION?              │
                         │                        ◇─────────◇               │
                   S403  │                             │                    │
   ┌─────────────────────┴──────────────────────┐   YES│   S405            │
   │ MAXIMUM VALUE OF ELECTRIC CURRENT           │      │                   │
   │ DEVIATION = ELECTRIC CURRENT DEVIATION ΔIv  │  ┌───┴──────────────────────────────────┐
   └─────────────────────┬──────────────────────┘  │ MAXIMUM VALUE OF ELECTRIC CURRENT     │
                         │                          │ DEVIATION = ELECTRIC CURRENT DEVIATION ΔIw │
                         │                          └───────────────────┬───────────────────┘
                         │                                              │
                         └──────────┬───────────────────────────────────┘
                               ┌────┴─────┐
                               │   END    │
                               └──────────┘
```

## FIG. 9

q-AXIS CURRENT

## FIG. 10

ELECTRICAL ANGLE

## FIG. 11

```
                              ┌─1606                      ┌─1607
θ(k-1) ──────▶│ TWO- TO      │────Iu_t_Max ──▶│              │
θ(k-2) ──────▶│              │────Iu_t_Min ──▶│ ABNORMAL     │
              │ THREE-PHASE  │                 │              │
Iq_t(n-1) ───▶│              │────Iv_t_Max ──▶│ TORQUE       │
              │ TRANSFORMA-  │                 │              │
Id_t(n-1) ───▶│              │────Iv_t_Min ──▶│ ESTIMATION-  │
              │ TION         │                 │              │──▶ Tae
Iq_t(n-2) ───▶│              │────Iw_t_Max ──▶│ VALUE        │
              │ PROCESSES    │                 │              │
Id_t(n-2) ───▶│              │────Iw_t_Min ──▶│ CALCULATION  │
              └──────────────┘                 │              │
Iu(k) ──────────────────────────────────────▶│ PROCESS      │
                                               │              │
Iv(k) ──────────────────────────────────────▶│              │
                                               │              │
Iw(k) ──────────────────────────────────────▶└──────────────┘
```

# FIG. 12

START

S501
IS DETECTED PHASE-X CURRENT Ix LARGER THAN TARGET PHASE-X CURRENT MAXIMUM-VALUE Ix_t_Max ?

NO → S503
IS DETECTED PHASE-X CURRENT Ix SMALLER THAN TARGET PHASE-X CURRENT MINIMUM-VALUE Ix_t_Min ?

YES

NO

S502
ELECTRIC CURRENT DEVIATION Δix = DETECTED PHASE-X CURRENT Ix − TARGET PHASE-X CURRENT MAXIMUM-VALUE Ix_t_Max

YES

S504
ELECTRIC CURRENT DEVIATION Δix = DETECTED PHASE-X CURRENT Ix − TARGET PHASE-X CURRENT MINIMUM-VALUE Ix_t_Min

S505
ELECTRIC CURRENT DEVIATION Δix = 0

END

# FIG. 13

START

**S601** IS MOTOR REVOLUTION NUMBER AT REVOLUTION-NUMBER THRESHOLD VALUE OR LESS? — NO →

YES ↓

**S602** IS ELECTRIC-CURRENT DEVIATION DIFFERENCE MAXIMUM-VALUE $\Delta$IDiff AT THRESHOLD VALUE OR MORE? — NO →

YES ↓

**S603** ABNORMALITY COUNTER UNDERGOES INCREMENT

**S604** CLEAR RETENTION COUNTER

**S609** IS RETENTION COUNTER VALUE AT RETENTION COUNTER THRESHOLD-VALUE OR LESS? — NO →

YES ↓ **S610** RETENTION COUNTER UNDERGOES INCREMENT

**S611** CLEAR ABNORMALITY COUNTER

**S612** IS RETENTION COUNTER VALUE AT RETENTION COUNTER THRESHOLD-VALUE OR LESS? — NO →

YES ↓

**S613** RETENTION COUNTER UNDERGOES INCREMENT

**S614** CLEAR ABNORMALITY COUNTER

**S605** IS RETENTION COUNTER VALUE AT RETENTION COUNTER THRESHOLD-VALUE OR MORE? — NO →

YES ↓

**S606** FORCED PWM-SIGNAL TURN-OFF INSTRUCTION

**S607** FET-GATE-DRIVING CUTOFF INSTRUCTION

**S608** BATTERY VOLTAGE CUTOFF INSTRUCTION

END

EP 4 329 190 A1

FIG. 14

FIG.15

EP 4 329 190 A1

# FIG. 16

START

S701 — IS ABNORMAL TORQUE VALUE AT THRESHOLD VALUE OR MORE, AND ARE DETECTED ELECTRIC-CURRENTS IN ABNORMAL STATE?

→ NO

YES

S702 — INDIVIDUAL PHASE OPEN-FAILURE DETERMINATION PROCESSING

S703 — IS ONLY PHASE-U IN OPEN FAILURE?

NO →

YES

S705 — IS ONLY PHASE-V IN OPEN FAILURE?

NO →

YES

S707 — IS ONLY PHASE-W IN OPEN FAILURE?

NO →

YES

S709 — ABNORMALITY COUNTER UNDERGOES INCREMENT

S710 — DOES FAILURE COUNTER REACH AT PREDETERMINED COUNT VALUE WITHIN PREDETERMINED CUMULATIVE TIME?

YES

S704 — FAILURE DETERMINATION RESULT = PHASE-U OPEN-FAILURE

S706 — FAILURE DETERMINATION RESULT = PHASE-V OPEN-FAILURE

S708 — FAILURE DETERMINATION RESULT = PHASE-W OPEN-FAILURE

S711 — FAILURE DETERMINATION RESULT = OTHERS

END

## FIG. 17

START

S801

DO DETECTED CURRENTS
WHEN INDIVIDUAL PHASE ARM DRIVE ELEMENTS
ARE TURNED OFF STAY WITHIN PREDETERMINED RANGE,
AND DO THEY CONTINUE FOR
PREDETERMINED TIME?

NO

YES

S802

IS |Iu| WITHIN PREDETERMINED
THRESHOLD VALUE?

NO

YES

S803

IS |Vu| > |Vv|, AND
IS |Vu| > |Vw| ?;
OR
IS |Iv| MORE THAN PREDETERMINED THRESHOLD VALUE, AND
IS |Iw| MORE THAN PREDETERMINED THRESHOLD VALUE?

NO

YES

S804

EXECUTE INCREMENT PROCESS OF
PHASE-U OPEN-FAILURE COUNTER

S805

DOES PHASE-U OPEN-FAILURE
COUNTER REACH AT PREDETERMINED COUNT VALUE
WITHIN PREDETERMINED CUMULATIVE TIME?

NO

YES

S806

PHASE-U FAILURE DETERMINATION FLAG = "ON"

END

# FIG. 18

```
                    ┌─────────────┐
                    │    START    │
                    └─────────────┘
                           │
                           ▼
                  ╱────────────────╲                              S901
         ╱──────╱   DO DETECTED CURRENTS ╲──────╲
        ╱  WHEN INDIVIDUAL PHASE ARM DRIVE ELEMENTS  ╲      NO
       ╱  ARE TURNED OFF STAY WITHIN PREDETERMINED RANGE,  ╲─────────┐
        ╲  AND    DO  THEY CONTINUE FOR                    ╱          │
         ╲────────╲  PREDETERMINED TIME?  ╱──────────────╱           │
                  ╲────────────────╱                                 │
                           │ YES                                     │
                           ▼                                         │
                  ╱────────────────╲                   S902          │
         ╱───────╱  IS |Iv| WITHIN PREDETERMINED ╲──────╲   NO       │
         ╲        ╲   THRESHOLD VALUE ?          ╱      ╱────────┐    │
                  ╲────────────────╱                             │    │
                           │ YES                                 │    │
                           ▼                                     │    │
                  ╱────────────────╲               S903          │    │
                 ╱   IS  |Vv| > |Vu| , AND  ╲                    │    │
                ╱    IS  |Vv| > |Vw| ? ;      ╲                  │    │
               ╱            OR                   ╲   NO           │    │
               ╲  IS |Iu| MORE THAN PREDETERMINED THRESHOLD VALUE, AND │
                ╲ IS |Iw| MORE THAN PREDETERMINED THRESHOLD VALUE? ╱─┐ │ │
                 ╲────────────────╱                               │ │ │
                           │ YES                                  │ │ │
                           ▼                        S904          │ │ │
              ┌──────────────────────────────┐                   │ │ │
              │ EXECUTE  INCREMENT PROCESS OF │                   │ │ │
              │ PHASE-V OPEN-FAILURE COUNTER  │                   │ │ │
              └──────────────────────────────┘                   │ │ │
                           │                                      │ │ │
                           ▼                        S905          │ │ │
                  ╱────────────────╲                              │ │ │
         ╱───────╱  DOES PHASE-V OPEN-FAILURE ╲──────╲   NO       │ │ │
        ╱  COUNTER REACH AT PREDETERMINED COUNT VALUE  ╲────┐     │ │ │
         ╲  WITHIN PREDETERMINED CUMULATIVE TIME?     ╱     │     │ │ │
                  ╲────────────────╱                        │     │ │ │
                           │ YES              S906          │     │ │ │
                           ▼                                │     │ │ │
              ┌──────────────────────────────┐             │     │ │ │
              │ PHASE-V FAILURE DETERMINATION │             │     │ │ │
              │        FLAG = "ON"            │             │     │ │ │
              └──────────────────────────────┘             │     │ │ │
                           │◄───────────────────────────────┴─────┴─┴─┘
                           ▼
                    ┌─────────────┐
                    │    END      │
                    └─────────────┘
```

# FIG. 19

START

S1001
DO DETECTED CURRENTS WHEN INDIVIDUAL PHASE ARM DRIVE ELEMENTS ARE TURNED OFF STAY WITHIN PREDETERMINED RANGE, AND DO THEY CONTINUE FOR PREDETERMINED TIME?

NO

YES

S1002
IS |Iw| WITHIN PREDETERMINED THRESHOLD VALUE?

NO

YES

S1003
IS |Vw| > |Vv|, AND
IS |Vw| > |Vu|?;
OR
IS |Iv| MORE THAN PREDETERMINED THRESHOLD VALUE, AND
IS |Iu| MORE THAN PREDETERMINED THRESHOLD VALUE?

NO

YES

S1004
EXECUTE INCREMENT PROCESS OF PHASE-W OPEN-FAILURE COUNTER

S1005
DOES PHASE-W OPEN-FAILURE COUNTER REACH AT PREDETERMINED COUNT VALUE WITHIN PREDETERMINED CUMULATIVE TIME?

NO

YES

S1006
PHASE-W FAILURE DETERMINATION FLAG = "ON"

END

## FIG. 20

START

S1101 — IS MOTOR REVOLUTION NUMBER AT REVOLUTION-NUMBER THRESHOLD VALUE OR LESS? — NO →

YES ↓

S1102 — DOES FAILURE RESULT INDICATE ONLY PHASE-U OPEN FAILURE? — NO →

YES ↓

S1105 — DOES FAILURE RESULT INDICATE ONLY PHASE-V OPEN FAILURE? — NO →

YES ↓

S1108 — DOES FAILURE RESULT INDICATE ONLY PHASE-W OPEN FAILURE? — NO →

YES ↓

S1111 — CONTROL INSTRUCTION = FORCED PWM-SIGNAL TURN-OFF INSTRUCTION

S1103 — CONTROL INSTRUCTION = MOTOR DRIVE-OPERATION INSTRUCTION BY OTHER PHASES OTHER THAN PHASE-U

S1106 — CONTROL INSTRUCTION = MOTOR DRIVE-OPERATION INSTRUCTION BY OTHER PHASES OTHER THAN PHASE-V

S1109 — CONTROL INSTRUCTION = MOTOR DRIVE-OPERATION INSTRUCTION BY OTHER PHASES OTHER THAN PHASE-W

S1112 — FET-GATE-DRIVING CUTOFF INSTRUCTION

S1104 — GIVE MOTOR CURRENT CUTOFF INSTRUCTION OF PHASE-U

S1107 — GIVE MOTOR CURRENT CUTOFF INSTRUCTION OF PHASE-V

S1110 — GIVE MOTOR CURRENT CUTOFF INSTRUCTION OF PHASE-W

S1113 — MOTOR CURRENT CUTOFF INSTRUCTION

S1114 — BATTERY VOLTAGE CUTOFF INSTRUCTION

END

## FIG. 21

## FIG. 22

## FIG. 23

## FIG. 24

## INTERNATIONAL SEARCH REPORT

| International application No. |
| --- |
| **PCT/JP2021/045949** |

### A. CLASSIFICATION OF SUBJECT MATTER

*H02P 29/024*(2016.01)i
FI: H02P29/024

According to International Patent Classification (IPC) or to both national classification and IPC

### B. FIELDS SEARCHED

Minimum documentation searched (classification system followed by classification symbols)

H02P29/024; B62D5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2002-34266 A (NISSAN MOTOR CO., LTD.) 31 January 2002 (2002-01-31) paragraphs [0009]-[0014], [0017]-[0026], fig. 1-4 | 1-11 |
| Y | JP 2013-31356 A (MITSUBISHI ELECTRIC CORP.) 07 February 2013 (2013-02-07) paragraphs [0015]-[0041], [0048]-[0069], [0297]-[0304], fig. 1-6, 17 | 1-11 |
| Y | JP 2005-94873 A (NISSAN MOTOR CO., LTD.) 07 April 2005 (2005-04-07) paragraphs [0007]-[0011], [0022]-[0023], [0026]-[0037], fig. 1-2, 13-16 | 5-11 |
| Y | JP 2011-250567 A (JTEKT CORP.) 08 December 2011 (2011-12-08) paragraphs [0046]-[0060], fig. 2-3, 6, 8 | 6-11 |
| Y | JP 2009-113760 A (NSK LTD.) 28 May 2009 (2009-05-28) paragraphs [0017]-[0048], fig. 1-2 | 10-11 |
| A | JP 2014-204556 A (JTEKT CORP.) 27 October 2014 (2014-10-27) paragraphs [0026]-[0040], fig. 2, 4-7 | 1-11 |
| A | JP 2003-153401 A (HITACHI, LTD.) 23 May 2003 (2003-05-23) paragraphs [0016]-[0045], fig. 1-6 | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 February 2022** | **22 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/045949**

| Patent document cited in search report | | | Publication date (day/month/year) | Patent family member(s) | Publication date (day/month/year) |
|---|---|---|---|---|---|
| JP | 2002-34266 | A | 31 January 2002 | US 2002/0008492 A1<br>paragraphs [0013]-[0021], [0026]-[0040], fig. 1-4 | |
| JP | 2013-31356 | A | 07 February 2013 | US 2014/0054103 A1<br>paragraphs [0036]-[0078], [0090]-[0129], [0458]-[0470], fig. 1-6, 17<br>WO 2012/176553 A1<br>EP 2725705 A1 | |
| JP | 2005-94873 | A | 07 April 2005 | (Family: none) | |
| JP | 2011-250567 | A | 08 December 2011 | (Family: none) | |
| JP | 2009-113760 | A | 28 May 2009 | (Family: none) | |
| JP | 2014-204556 | A | 27 October 2014 | US 2014/0300305 A1<br>paragraphs [0031]-[0046], fig. 2, 4-7<br>EP 2787633 A2<br>CN 104104287 A | |
| JP | 2003-153401 | A | 23 May 2003 | US 2003/0085678 A1<br>paragraphs [0045]-[0079], fig. 1-6<br>EP 1311060 A2 | |

Form PCT/ISA/210 (patent family annex) (January 2015)

**EP 4 329 190 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5092538 B